# EUROPÄISCHE PATENTSCHRIFT

(11) **EP 3 723 007 B1**
(45) Veröffentlichungstag und Bekanntmachung des Hinweises auf die Patenterteilung: **10.03.2021**
(21) Anmeldenummer: 19168963.7
(22) Anmeldetag: 12.04.2019
(51) Int. Cl.: H04L 12/28

(54) **VERFAHREN UND STEUERSYSTEM ZUM STEUERN EINER AUSFÜHRUNG VON TRANSAKTIONEN**
METHOD AND CONTROL SYSTEM FOR CONTROLLING AN EXECUTION OF TRANSACTIONS
PROCÉDÉ ET SYSTÈME DE COMMANDE PERMETTANT DE COMMANDER L'EXÉCUTION DES TRANSACTIONS

(43) Veröffentlichungstag der Anmeldung: 14.10.2020
(73) Patentinhaber: Siemens Aktiengesellschaft, 80333 München (DE)
(72) Erfinder: Jetzfellner, Thomas, 85609 Aschheim (DE); Sauer, Markus, 81739 München (DE)

(56) Entgegenhaltungen:
- EP-A1- 3 462 313
- WO-A1-2017/145006
- DE-A1-102016 015 766
- CHRISTIDIS KONSTANTINOS ET AL: "Blockchains and Smart Contracts for the Internet of Things", IEEE ACCESS, Bd. 4, 10. Mai 2016 (2016-05-10), Seiten 2292-2303, XP011613134, DOI: 10.1109/ACCESS.2016.2566339 [gefunden am 2016-06-03]

## Beschreibung

Die Aufgabe der Erfindung ist es eine Alternative zum Stand der Technik zu bilden.

Die Erfindung bezieht sich auf ein Verfahren und ein Steuersystem zum Steuern einer Ausführung von Transaktionen.

Nachfolgend werden Aspekte der Erfindung erläutert.

Gemäß einem ersten Aspekt betrifft die Erfindung eine Vorrichtung aufweisend:
- ein erstes Empfangsmodul, wobei
   ∘ das erste Empfangsmodul zum Empfangen von einer Transaktion eingerichtet ist,
   ∘ die Transaktion Steuerbefehle umfasst,
   ∘ die Steuerbefehle insbesondere von einem oder mehreren Geräten einer Netzwerkapplikation ausgeführt werden sollen;
- ein Bestimmungsmodul, wobei
   ∘ das Bestimmungsmodul dazu eingerichtet ist, ein Gerät oder mehrere Geräte zu bestimmen, die jeweils die Steuerbefehle ganz oder teilweise ausführen,
   ∘ das Bestimmungsmodul dazu eingerichtet ist, an das Gerät oder die mehreren Geräte eine Anfragenachricht zur Ausführung der entsprechenden Steuerbefehle zu übermitteln,
- ein zweites Empfangsmodul, wobei
   ∘ das zweite Empfangsmodul zum Empfangen von Bestätigungsnachrichten eingerichtet ist,
   ∘ die Bestätigungsnachrichten Antworten des Gerätes oder der mehreren Geräte auf die Anfragenachricht sind;
- ein Bereitstellungsmodul, wobei
   ∘ das Bereitstellungsmodul dazu eingerichtet ist, die Transaktion und/oder die Steuerbefehle anhand der Bestätigungsnachrichten als Steuertransaktion oder als mehrere Steuertransaktionen bereitzustellen.

Beispielsweise können beim Bereitstellen die Steuertransaktion oder die Steuerbefehle in einer Netzwerkapplikation gespeichert werden; dies ist beispielhaft in der Druckschrift WO 2017/145006 A1 offenbart.

Die Vorrichtung kann beispielsweise mittels einer Netzwerk-Applikation und/oder eines verteilten Datenbanksystems und/oder einer Blockkette oder einer Kombination der genannten Möglichkeiten realisiert sein. Die Vorrichtung kann beispielsweise auch eine Netzwerk-Applikation oder ein verteiltes Datenbanksystem oder eine Blockkette sein oder als solche realisiert sein. Beispielsweise können das erste Empfangsmodul und/oder das Bestimmungsmodul und/oder das zweite Empfangsmodul und/oder das Bereitstellungsmodul mittels einer Netzwerk-Applikation und/oder eines verteilten Datenbanksystems und/oder einer Blockkette realisiert sein. Beispielsweise können eine Netzwerk-Applikation und/oder ein verteiltes Datenbanksystem und/oder eine Blockkette die Vorrichtung oder eine oder mehrere Module der Vorrichtung umfassen.

Die Technologie von Blockketten (engl. Blockchains) bzw. "Distributed Ledgers" ist aktuell eine intensiv diskutierte Technologie, die insbesondere als verteiltes Datenbanksystem oder als Netzwerk-Applikation realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, IoT-Geräte Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen des entsprechenden Moduls ausführt oder um das erfindungsgemäße Verfahren oder einen Schritt des erfindungsgemäßen Verfahrens zu implementieren oder zu realisieren. Es kann beispielsweise ein Prozessor derart ausgebildet sein, dass dieser die Funktionen von mehreren Modulen realisiert.

Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweiten Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) oder der Netzwerk-Applikation verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems (oder der Netzwerk-Applikation) oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems (oder der Netzwerk-Applikation) prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks, für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems (oder der Netzwerk-Applikation) den vorhergehenden Datenblock des verteilten Datenbanksystems (oder der Netzwerk-Applikation) angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems oder der Netzwerk-Applikation) verwendet werden, um einen neuen Datenblock mit einem (vorhandenen) Datenblock des verteilten Datenbanksystems (oder der Netzwerk-Applikation) zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems (oder der Netzwerk-Applikation) umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen bezieht. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann (um z. B. im ungeschützten Teil noch personenbezogene Daten zu speichern). Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems (oder der Netzwerk-Applikation) sein, eine Transaktionsprüfsumme eines Datenblocks mit den entsprechenden Daten (des verteilten Datenbanksystems oder der Netzwerk-Applikation oder einer anderen Datenbank) oder eine Datenprüfsumme, die über die Daten gebildet wurde.

Zusätzlich kann die entsprechende Transaktion noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank oder einer anderen Netzwerk-Applikation, welche die Daten umfasst) umfassen. Die entsprechenden Daten könnten dann beispielsweise auch in einer weiteren Transaktion eines weiteren Datenblocks des verteilten Datenbanksystems oder der Netzwerk-Applikation bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in den entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems oder der Netzwerk-Applikation möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems (oder der Netzwerk-Applikation) für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems oder einer Netzwerk-Applikation" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems (oder der Netzwerk-Applikation) verweisen bzw. diese referenzieren [1] [4] [5] .

Unter "Einfügen in das verteilte Datenbanksystem oder die Netzwerk-Applikation" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems oder einer Netzwerk-Applikation übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems oder der Netzwerk-Applikation verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, ein Blockketten-Orakel oder eine Blockketten-Plattform) erfolgen. Insbesondere kann dabei unter einer Blockketten-Plattform eine Blockkette als Dienst (engl. Blockchain as a Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems (oder der Netzwerk-Applikation) verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transkationen umfasst. Beispielsweise kann auch eine entsprechende Transaktion einen Smart-Contract umfassen. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktionen und/oder eine Bestätigungstransaktion mit einer Bestätigungsnachricht und/oder eine Ausführungsbestätigungstransaktion mit einer Ausführungsbestätigungsnachricht verstanden werden. Eine Ausführungsbestätigungsnachricht kann beispielsweise eine Bestätigung für eine Ausführung der Steuerbefehle der Steuertransaktion durch eines der Geräte umfassen, wenn ein entsprechendes Gerät der Geräte die Steuerbefehle der Steuertransaktion erfolgreich ausgeführt hat. Hierzu kann die Ausführungsbestätigungsnachricht beispielsweise eine von dem entsprechenden Gerät erzeugte Prüfsumme (z. B. eine Transaktionsprüfsumme) über die ausgeführten Steuerbefehle umfassen und/oder eine Bestätigung der Ausführung umfassen, die z. B. von der Prüfsumme ebenfalls geschützt ist. Eine Ausführungsbestätigungsnachricht kann beispielsweise auch in dem verteilten Datenbanksystem oder der Netzwerk-applikation gespeichert werden, wenn das Gerät die Steuerbefehle teilweise ausführt und/oder die Ausführung der Steuerbefehle unterbrochen wird. Dies kann z. B. der Fall sein, wenn während der Ausführung der Steuerbefehle ein Defekt an dem Gerät aufgetreten ist, der die Ausführung der Steuerbefehle nicht mehr erlaubt (z. B. trat ein Defekt an einem Aktor oder Werkzeug auf). Beispielsweise kann ein anderes Gerät, das beispielsweise die Ausführungsanforderungen für die verbleibenden unausgeführten Steuerbefehle erfüllt, dann anhand der Ausführungsbestätigungsnachricht diese unausgeführten Steuerbefehle der entsprechenden Steuertransaktion ausführen. Entsprechend kann die Ausführungsbestätigungsnachricht beispielsweise den Grad der Ausführung bzw. eine Angabe über den ausgeführten Teil der Steuerbefehle umfassen. Alternativ oder zusätzlich kann eine Ausführungsbestätigungsnachricht die Steuerbefehle angeben, die für eine erfolgreiche Ausführung der Steuerbefehle einer entsprechenden Steuertransaktion noch ausgeführt werden müssen. Entsprechend kann beispielsweise eine Ausführungsbestätigungsnachricht einen Datensatz umfassen, der angibt, welche der Steuerbefehle noch auszuführen sind bzw. der angibt, welche der Steuerbefehle für die erfolgreiche Ausführung der Steuerbefehle einer entsprechenden Steuertransaktion fehlen. Hierdurch wird beispielsweise ermöglicht, dass eine Weiterverarbeitung der Steuerbefehle erfolgen kann, selbst wenn die Ausführung der Steuerbefehle bei einem Gerät unterbrochen wurde. Entsprechend kann beispielsweise in den Ausführungsanforderungen gefordert sein, dass mehr als ein Gerät (z. B. zwei oder drei Geräte oder mehr Geräte) die Ausführungsanforderungen erfüllt, damit eine Ausführung der Steuerbefehle auch garantiert ist, selbst wenn z. B. ein Gerät während der Ausführung der Steuerbefehle einer entsprechenden Steuertransaktion ausfällt.

Alternativ kann eine Transaktion beispielsweise eine Datenstruktur sein, die Daten speichert (z. B. die Steuerbefehle). Eine Transaktion kann beispielsweise auch als Nachricht (also eine Kommunikationsnachricht, welche Daten speichert) bezeichnet werden bzw. eine Nachricht sein, die z. B. entsprechende Daten (z. B. Steuerbefehle) speichert. Mit der Erfindung können somit entsprechende Transaktionen oder Nachrichten ausgetauscht werden. Transaktionen können dabei z. B. die Steuerbefehle und/oder Vertragsdaten und/oder andere Daten wie Videodaten, Nutzerdaten, Messdaten etc. umfassen.

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems oder der Netzwerk-Applikation) oder die entsprechende Transaktion des verteilten Datenbanksystems oder der Netzwerk-Applikation) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem oder die Netzwerk-Applikation" erläutert ist.

Unter einem "Programmcode" (z. B. ein Smart-Contract oder Chain-Code) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem oder die Netzwerk-Applikation ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems oder der Netzwerk-Applikation ausgeführt [4][5]. Dabei wird beispielsweise eine virtuelle Maschine durch die Infrastruktur des verteilten Datenbanksystems (oder der Netzwerk-Applikation) realisiert.

Unter einem "Smart Contract" kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems oder der Netzwerk-Applikation (z. B. eine Blockkette) gespeichert, beispielsweise in einem Datenblock des verteilten Datenbanksystems (oder der Netzwerk-Applikation). Beispielsweise kann der Smart Contract auf die gleiche Weise ausgeführt werden, wie dies bei der Definition von "Programmcode", insbesondere im Zusammenhang mit der Erfindung, erläutert ist.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem oder durch die Netzwerk-Applikation verstanden werden, wobei beispielsweise die entsprechende Infrastruktur des verteilten Datenbanksystems oder der Netzwerk-Applikation den Programmcode ausführt.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt oder Inhalt einer bestimmten Transaktion zu lösen ist [1][4][5]. Eine solche rechenintensive Aufgabe wird beispielsweise auch als kryptographisches Puzzle bezeichnet.

Unter einer "Netzwerk-Applikation", kann im Zusammenhang mit der Erfindung beispielsweise eine dezentral verteilte Datenbank, ein verteiltes Datenbanksystem, eine verteilte Datenbank, eine Peer-to-Peer Applikation, ein verteiltes Speicherverwaltungssystem, eine Blockkette (engl. Blockchain), ein distributed ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Beispielsweise kann eine Netzwerk-Applikation (oder auch als Netzwerkapplikation bezeichnet) ein verteiltes Datenbanksystem sein, das z. B. mittels einer Blockkette oder einem distributed ledger realisiert ist. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder einer Kombination aus den genannten Implementierungsvarianten [6][7] umgesetzt ist. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" oder einer "Netzwerk-Applikation" kann beispielsweise auch ein verteiltes Datenbanksystem oder eine Netzwerk-Applikation verstanden werden, von dem/der zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen über gerichtete Kanten miteinander verbunden. Azyklisch bedeutet dabei insbesondere, dass es keine gerichteten Schleifen im Graphen gibt.

Bei dem verteilten Datenbanksystem oder bei der Netzwerk-Applikation kann es sich beispielsweise um ein öffentliches verteiltes Datenbanksystem oder eine öffentliche Netzwerk-Applikation (z. B. eine öffentliche Blockkette) oder ein geschlossenes (oder privates) verteiltes Datenbanksystem oder eine geschlossene Netzwerk-Applikation (z. B. eine private Blockkette) handeln.

Handelt es sich beispielsweise um ein öffentliches verteiltes Datenbanksystem oder eine öffentliche Netzwerk-Applikation, bedeutet dies, dass neue Knoten und/oder Geräte ohne Berechtigungsnachweise oder ohne Authentifizierung oder ohne Anmeldeinformationen oder ohne Credentials dem verteilten Datenbanksystem oder der Netzwerk-Applikation beitreten können bzw. von diesem akzeptiert werden. Insbesondere können in einem solchen Fall die Betreiber der Knoten und/oder Geräte anonym bleiben.

Handelt es sich bei dem verteilten Datenbanksystem oder der Netzwerk-Applikation beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem oder der Netzwerk-Applikation beitreten zu können bzw. von diesem akzeptiert zu werden.

Bei einem verteilten Datenbanksystem oder bei der Netzwerk-Applikation kann es sich beispielsweise auch um ein verteiltes Kommunikationssystem zum Datenaustausch handeln. Dies kann beispielsweise ein Netzwerk oder ein Peer-to-Peer Netzwerk sein.

Bei einem/dem verteilten Datenbanksystem kann es sich beispielsweise auch um ein dezentrales verteiltes Datenbanksystem und/oder ein dezentrales verteiltes Kommunikationssystem handeln.

Bei einer "Netzwerk-Applikation" kann es sich beispielsweise auch um eine Netzwerk-Applikationsinfrastruktur handeln oder die Netzwerk-Applikation umfasst eine entsprechende Netzwerk-Applikationsinfrastruktur. Diese Infrastruktur kann beispielsweise Knoten und/oder Kommunikationsnetze und/oder Datenschnittstellen und/oder weitere Komponenten umfassen, um die Netzwerk-Applikation zu realisieren oder auszuführen. Bei der Netzwerk-Applikation kann es sich z. B. um eine verteilte Netzwerk-Applikation (z. B. eine verteilte Peer-to-Peer Applikation oder ein verteiltes Datenbanksystem) handeln, die beispielsweise auf mehreren Knoten der Netzwerk-Applikationsinfrastruktur ausgeführt wird.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems oder einer Netzwerk-Applikation (z. B. eine Blockkette oder eine Peer-to-Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Blockheader), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem oder der Netzwerk-Applikation gespeichert sind. Damit lassen sich beispielsweise blocklose (engl. blockless) verteilte Datenbanksysteme oder Netzwerk-Applikationen, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems oder der Netzwerk-Applikation) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem oder der Netzwerk-Applikation in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht. Beispielsweise können zusätzlich zu einer Prüfsumme über die Transaktionen auch eine Prüfsumme über den "State", d. h. die Zustände der Smart-Contracts und/oder der Konten und/oder über die Rückgabewerte der Transaktionen (engl. Transaction Receipts) z. B. in die Transaktion und/oder den Datenblock eingefügt werden.

Unter "Nonce" kann im Zusammenhang mit der Erfindung beispielsweise eine kryptographische Nonce verstanden werden (Abkürzung für: "used only once" [2] oder "number used once" [3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems oder der Netzwerk-Applikation" kann im Zusammenhang mit der Erfindung beispielsweise der Datenblock des verteilten Datenbanksystems oder der Netzwerk-Applikation verstanden werden, der insbesondere einem (bestimmten) Datenblock direkt vorhergeht. Alternativ können unter "vorhergehender Datenblöcke eines (bestimmten) Datenblockes des verteilten Datenbanksystems oder der Netzwerk-Applikation" insbesondere auch alle Datenblöcke des verteilten Datenbanksystems oder der Netzwerk-Applikation verstanden werden, die dem bestimmten Datenblock vorhergehen. Hierdurch kann beispielsweise die Verkettungsprüfsumme oder die Transaktionsprüfsumme insbesondere nur über den dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems der der Netzwerk-Applikation" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem oder der Netzwerk-Applikation (z. B. eine Blockkette) durchführen [1][4][5]. Solche Knoten können beispielsweise Transaktionen eines verteilten Datenbanksystems oder einer Netzwerk-Applikation bzw. deren Datenblöcke ausführen oder neue Datenblöcke mit neuen Transaktionen in das verteilte Datenbanksystem oder die Netzwerk-Applikation mittels neuer Datenblöcke einfügen bzw. verketten. Insbesondere kann dieses Validieren und/oder Verketten durch einen vertrauenswürdigen Knoten (z. B. einen Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem oder der Netzwerk-Applikation, eine Knotenprüfsumme (z. B. eine digitale Signatur oder ein Zertifikat) in dem neuen Datenblock speichern. Bei der Knotenprüfsumme kann es sich dabei beispielsweise um eine von einem entsprechenden Knoten signierte Prüfsumme z. B. eines Datenblocks oder einer Transaktion handeln. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder einer industriellen Anlage und/oder eines Automatisierungsnetzes und/oder einer Fertigungsanlage, die insbesondere auch ein Knoten des verteilten Datenbanksystems oder der Netzwerk-Applikation sind. Dabei können die Geräte beispielsweise Feldgeräte sein oder Geräte im Internet der Dinge sein, die insbesondere auch ein Knoten des verteilten Datenbanksystems oder der Netzwerk-Applikation sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise über Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Bloccketten-Orakels löscht). Das Sicherheitsmodul kann dabei beispielsweise kryptographische Schlüssel umfassen, die z. B. für die Signatur der Transaktion und/oder für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smart-Phone, ein Server, die jeweils außerhalb der Blockkette angeordnet sind bzw. kein Teilnehmer des verteilten Datenbanksystems oder der Netzwerk-Applikation (z. B. der Blockkette) sind (also keine Operationen mit dem verteilten Datenbanksystem oder der Netzwerk-Applikation durchführen oder diese nur abfragen, ohne jedoch Transaktionen durchzuführen, Datenblöcke einzufügen oder Proof-of-Work-Nachweise zu berechnen), verstanden werden. Alternativ kann insbesondere auch unter einem Rechner ein Knoten des verteilten Datenbanksystems oder der Netzwerk-Applikation verstanden werden. Mit anderen Worten kann insbesondere unter einem Gerät ein Knoten des verteilten Datenbanksystems oder der Netzwerk-Applikation verstanden werden oder auch ein Gerät außerhalb der Blockkette bzw. des verteilten Datenbanksystems oder der Netzwerk-Applikation verstanden werden. Ein Gerät außerhalb des verteilten Datenbanksystems oder der Netzwerk-Applikation kann beispielsweise auf die Daten (z. B. Transaktionen oder Steuertransaktionen) des verteilten Datenbanksystems oder der Netzwerk-Applikation zugreifen und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems oder der Netzwerk-Applikation) durch einen Knoten realisiert, kann dies z. B. mittels eines Smart-Contracts erfolgen, der insbesondere in einer Transaktion des verteilten Datenbanksystems oder der Netzwerk-Applikation gespeichert ist. Ein Rechner oder ein Gerät kann beispielsweise auch ein Teil der Infrastruktur sein, die z. B. die Netzwerk-Applikation oder das verteilte Datenbanksystem ausführt, realisiert oder umfasst.

Unter "Steuerbefehle" oder "Steuertransaktionen" können im Zusammenhang mit der Erfindung beispielsweise ein Smart-Contract [4][5] oder ausführbarer Programmcode verstanden werden, der insbesondere durch die Netzwerkapplikation oder das verteilte Datenbanksystem oder durch entsprechende Geräte ausgeführt wird, wobei beispielsweise das verteilte Datenbanksystem bzw. dessen Knoten und Infrastruktur die entsprechenden Steuerbefehle abarbeitet bzw. umsetzt. Insbesondere ergeben mehrere Steuerbefehle oder Steuertransaktionen aus einem oder mehreren Datenblöcken eine Befehlsfolge. Mittels der Steuerbefehle werden insbesondere eine Fertigungsanlage mit den zugehörigen Fertigungsmaschinen (z. B. Geräte) gesteuert, die Geräte eines Automatisierungsnetzes gesteuert oder die Geräte eines Energieversorgungsnetzes gesteuert oder Geräte im Internet der Dinge gesteuert. Insbesondere sind in den Steuerbefehlen oder Steuertransaktionen (also auch in den Befehlsfolgen) die Fertigungsanweisungen oder Fertigungsschritte für ein Produkt und dessen Herstellung kodiert. Mit den Steuerbefehlen oder Steuertransaktionen werden beispielsweise Geräte gesteuert, indem beispielsweise ein Gerät die entsprechenden Steuerbefehle ausführt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage und/oder Geräte im Internet der Dinge, die insbesondere auch ein Knoten des verteilten Datenbanksystems sind. Dabei können die Geräte beispielsweise Feldgeräte sein, die insbesondere auch ein Knoten des verteilten Datenbanksystems sind. Die Geräte können beispielsweise auch Bankautomaten sein, wobei die Steuerbefehle eine Geldauszahlung veranlassen. Beispielsweise können die Steuerbefehle aus einer Befehlsfolge abgeleitet werden bzw. aus diesen bestimmt werden. Beispielsweise kann eine Steuertransaktion einen oder mehrere Steuerbefehle umfassen. Beispielsweise kodieren die Steuerbefehle mechanische Bewegung und/oder andere physikalische Größen (z. B. Druck oder Temperatur), die von einem entsprechenden Gerät/Knoten (z. B. durch einen entsprechenden Aktor) in die entsprechende mechanische Bewegung und/oder die entsprechende andere physikalische Größen umgesetzt werden. Mit den Steuerbefehlen werden dann beispielsweise Aktoren der Geräte und/oder Knoten gesteuert. Entsprechend umfasst ein entsprechendes Gerät/Knoten beispielsweise einen Aktor. Ist ein Gerät/Knoten beispielsweise ein Roboter, so würde ein Aktor auch als Effektor bezeichnet werden. Bei einem Gerät kann es sich beispielsweise auch um ein mechatronisches Gerät oder System handeln, wobei ein mechatronisches Gerät/System beispielsweise ein Aktor und/oder ein lineartechnisches Gerät ist. Ein lineartechnisches Gerät ist beispielsweise ein Gerät zur Ausführung translativer Bewegungen. Bei einem entsprechenden Gerät kann es sich beispielsweise auch um ein Antriebssystem handeln. Mittels der Steuerbefehle und der Geräte und/oder Knoten kann beispielsweise auch ein Regelkreis geregelt und/oder gesteuert werden, indem beispielsweise die Ausführungsbestätigungsnachrichten für ausgeführte Steuerbefehle durch die Vorrichtung oder durch die Netzwerkapplikation ausgewertet werden und entsprechende Steuerbefehle als Reaktion auf die Ausführungsbestätigungsnachrichten erzeugt werden. Für diese neuen Steuerbefehle werden dann beispielsweise wieder entsprechende Ausführungsanforderungen bestimmt oder abgerufen und diese werden dann beispielsweise wieder Steuertransaktionen zugeordnet, damit diese beispielsweise - wie in der Erfindung beschrieben - von den entsprechenden Geräten für die Ausführung der Steuerbefehle berücksichtigt werden. Bei den Steuerbefehlen kann es sich beispielsweise auch um Steuerbefehle zum Steuern von kryptographischen Geräten und/oder Verfahren handeln (z. B. eine Nutzerauthentisierung oder Nutzerauthentifizierung).

Unter Steuerbefehlen können beispielsweise auch Befehlsfolgen oder auch Transaktionen aus einer Datenbank bzw. eines Datenbanksystems verstanden werden, die durch Geräte oder Knoten des verteilten Datenbanksystems ausgeführt werden sollen. Bei dem Datenbanksystem kann es sich beispielsweise um das verteilte Datenbanksystem handeln, wenn es z. B. Transaktionen gibt, denen noch keine Ausführungsanforderungen zugewiesen bzw. zugeordnet wurden. Alternativ oder zusätzlich kann das Datenbanksystem eine andere Datenbank sein, z. B. eine konventionelle hierarchische Datenbank, von der die entsprechenden Transaktionen abgerufen werden können. Unter Steuerbefehle können beispielsweise auch Befehlsfolgen oder auch Transaktionen verstanden werden, die durch ein Eingabesystem bereitgestellt werden und die von dem verteilten Datenbanksystem oder der Netzwerkapplikation ausgeführt werden sollen. Unter Steuerbefehlen können beispielsweise Befehlsfolgen oder Steuerbefehle verstanden werden, mit denen mechanische und/oder elektrische und/oder elektromechanische und/oder elektronische Geräte gesteuert werden.

Unter "Geräteanforderungen" können im Zusammenhang mit der Erfindung beispielsweise Eigenschaften verstanden werden, die ein Gerät für eine Ausführung der Steuertransaktion oder der Steuerbefehle einhalten muss. Mittels der Geräteanforderungen kann beispielsweise ein bestimmtes vorgegebenes Gerät sein, das z. B. die Steuerbefehle bzw. die Steuertransaktion ausführen sollen. Mit anderen Worten werden beispielsweise durch die Geräteanforderungen Vorgeben festgelegt, die ein Gerät, das die Steuerbefehle ausführen soll, erfüllen muss. Die Geräteanforderungen werden dabei z. B. anhand von Geräteeigenschaften eines entsprechenden Gerätes überprüft. Die Geräteanforderungen legen z. B. durch einen eindeutigen Identifizierer fest, welche Geräte die vorgegebenen Steuerungsaktionen durchführen können bzw. sollen (z. B. ein Fertigungsroboter, der Metallteile verschweißen kann; ein Lackierroboter, der vorgegebene Farben auf ein Fertigungsteil auftragen kann; Geräte, die in einem Umspannwerk elektrische Verbindungen automatisiert herstellen). Es kann z. B. auch ein Gerät vorgegeben sein, das die Fertigungsschritte bzw. Steuerbefehle mit einer vorgegebenen Präzision und/oder Geschwindigkeit ausführt (z. B. Drehbänke, Fräsen und Schneidemaschinen). Alternativ oder zusätzlich können "Geräteanforderungen" auch bestimmte Geräteklassen voraussetzen, die für eine Ausführung oder Abarbeitung der Steuerbefehle vorgegeben werden. Insbesondere wird dabei unter einer Geräteklasse ein oder mehrere Geräte (z. B. Schleifgeräte oder Sägegeräte) verstanden, die beispielsweise in der Lage sind, bestimmte vorgegebene Aktionen auszuführen (z. B. ein bestimmtes Material schleifen oder sägen). Insbesondere sind die Geräteanforderungen (die auch als gerätespezifischen Anforderungen bezeichnet werden können) die Anforderungen, die zum Ausführen der Steuerbefehle an die entsprechenden Geräte und/oder Knoten gestellt werden. Die Geräteeigenschaften (die auch als gerätespezifische Daten bezeichnet werden können) entsprechen dann beispielsweise den tatsächlichen und/oder aktuellen Geräteeigenschaften eines Gerätes. Beispielsweise wird überprüft, ob ein Gerät bzw. eine Fertigungsmaschine in der Lage ist, die Steuerbefehle mit der vorgegebenen Präzision, die z. B. in den gerätespezifischen Anforderungen vorgegeben sind, auszuführen. Insbesondere können gerätespezifische Anforderungen auch als maschinelle und/oder mechatronische und/oder fertigungsspezifische Anforderungen bezeichnet werden. Insbesondere können gerätespezifische Daten oder Geräteeigenschaften auch als maschinelle und/oder mechatronische und/oder fertigungsspezifische Daten oder Geräteeigenschaften bezeichnet werden. Insbesondere können gerätespezifische Daten oder Geräteeigenschaften auch als Geräteinformationen bezeichnet werden. Insbesondere geben die Geräteanforderungen die Anforderungen vor, die durch die gerätespezifischen Daten eines Gerätes erfüllt sein sollen. Mit anderen Worten geben die Geräteanforderungen einen "Soll"-Wert vor, der mit dem "Ist"-Wert von den Geräten abgeglichen wird. Die gerätespezifischen Daten stellen dabei insbesondere die aktuellen Geräteeigenschaften dar. Diese Geräteeigenschaften bzw. gerätespezifischen Daten umfassen beispielsweise die UID eines Gerätes bzw. eines Systems, verfügbare Werkzeuge oder unterstützte Fertigungsverfahren (fräsen, schleifen oder 3D-drucken), Fertigungspräzision, Fertigungskosten, Standort der Geräte, Netzwerkadresse zum Ansprechen/Ansteuern des Gerätes, berechtigte Nutzer usw.

Die Geräteanforderungen können beispielsweise auch Sicherheitsanforderungen oder ortsbezogene Anforderungen (z. B. eine Länderangabe, eine GPS-Angabe oder Postleitzahl (PLZ)) sein oder diese umfassen, die ein Gerät für die Ausführung der Steuerbefehle erfüllen soll. Beispielsweise kann gefordert sein, dass das Gerät vorgegebene Sicherheitseinrichtungen aufweisen soll oder für die Ausführung der Steuerbefehle am Gerät noch eine bestimmte oder eine vorgegebene Authentisierung und/oder Authentifizierung notwendig ist. Dies kann beispielsweise der Fall sein, wenn jemand an einem Gerät (z. B. einem Geldautomaten) sich Bargeld auszahlen lassen möchte. Die Steuerbefehle sind dann beispielsweise die Anforderung des Kunden eine Geldauszahlung vorzunehmen. Hat beispielsweise ein entsprechender Kunde konfiguriert, dass er z. B. nur in vorgegebenen Ländern, z. B. Italien, Frankreich und Österreich, eine Bargeldauszahlung erlaubt, so wird dies in den gerätespezifischen Anforderungen (und insbesondere ggf. implizit in den Ausführungsanforderungen ebenfalls) gespeichert. Ein Geldautomat in Andorra würde dann ggf. keine Auszahlung erlauben bzw. diese unterbinden. Alternativ kann dies z. B. auch durch einen anderen Knoten des verteilten Datenbanksystems unterbunden werden oder durch einen Smart-Contract des verteilten Datenbanksystems unterbunden werden. Auch kann beispielsweise durch die Sicherheitsanforderungen eine spezifische Authentifizierung des Kunden gefordert sein. Beispielsweise, dass ein Pin für ein Auszahlung eingegeben wird (was z. B. in den USA nicht zwangsläufig der Fall ist) und/oder eine bestimmte Pin-Länge gefordert ist (z. B. 8 Zeichen) und/oder, dass andere zusätzliche Authentisierungsverfahren gefordert sind (z. B. 2 Faktor-Authentisierung, Mobile-Tan, Google Authenticator).

Alternativ kann das Bestimmungsmodul die Steuerbefehle auch weiter analysieren und, wenn beispielsweise das Bestimmungsmodul bereits feststellt, dass die Geräteanforderungen nicht erfüllt sind oder nicht erfüllbar sind, eine Steuertransaktion erstellen, die das entsprechende Gerät oder das System oder die Netzwerkapplikation darauf hinweist und ggf. eine Ausführung der Steuerbefehle unterbindet. Alternativ kann beispielsweise auch keine Steuertransaktion erzeugt werden und es gibt irgendwann einen Timeout für die Ausführung der Steuerbefehle, z. B. nach einem vorgegebenen Zeitraum, der vorzugsweise konfigurierbar ist.

Unter "systemspezifischen Daten" oder "gerätespezifische Daten" oder "Geräteeigenschaften" können im Zusammenhang mit der Erfindung beispielsweise auch Systemeigenschaften oder Geräteeigenschaften eines Gerätes oder eines technischen Systems verstanden werden. Die gerätespezifischen Daten oder systemspezifischen Daten oder Geräteeigenschaften sind beispielsweise aktuelle Geräteeigenschaften oder Systemeigenschaften. Die gerätespezifischen Daten oder systemspezifischen Daten (bzw. die entsprechenden Eigenschaften) können beispielsweise für ein technisches System, die Geräte eines technischen Systems oder ein Gerät folgende Daten umfassen: die UID des Gerätes bzw. des Systems, verfügbare Werkzeuge oder unterstützte Fertigungsverfahren (fräsen, schleifen oder 3D-drucken) des Gerätes bzw. des Systems, Fertigungspräzision des Gerätes bzw. des Systems, Fertigungskosten des Gerätes bzw. des Systems, Standort des Gerätes bzw. des Systems, Netzwerkadresse zum Ansprechen/Ansteuern des Gerätes bzw. des Systems, berechtigte Nutzer für das Gerät oder das System, Namen des Gerätes bzw. des Systems, usw.

Je nach gewählter Implementierung können beispielsweise die systemspezifischen Daten übergreifend für ein Gerät oder mehrere Geräte eines technischen Systems realisiert sein, indem z. B. über eine UID/(Netzwerk-)Adresse des technischen Systems auch die entsprechenden Geräte des technischen Systems adressiert, identifiziert oder mit diesen kommuniziert werden können. Alternativ oder zusätzlich können beispielsweise die gerätespezifischen Daten für das eine Gerät oder die mehreren Geräte des technischen Systems in den systemspezifischen Daten umfasst sein.

Unter einem "technischen System" können im Zusammenhang mit der Erfindung beispielsweise ein Gerät oder mehrere Geräte verstanden werden, die kommunikativ miteinander und/oder mit einem verteilten Datenbanksystem (z. B. das erste verteilte Datenbanksystem) und/oder mit der Netzwerkapplikation verbunden sind.

Unter "vorausgesetzte Steuerbefehle" können im Zusammenhang mit der Erfindung beispielsweise Steuerbefehle verstanden werden, die insbesondere durch andere Knoten (des verteilten Datenbanksystems) und/oder durch eines oder mehrere der Geräte bereits ausgeführt sein müssen, bevor die entsprechenden Steuerbefehle ausgeführt werden können. Insbesondere sind für diese vorausgeführten Steuerbefehle entsprechende Ausführungsbestätigungsnachrichten in dem verteilten Datenbanksystem oder der Netzwerkapplikation gespeichert (z. B. in Datenblöcken des verteilten Datenbanksystems), wenn z. B. die vorausgeführten Steuerbefehle durch Geräte oder Knoten erfolgreich ausgeführt wurden. Insbesondere werden bei diesen vorausgeführten oder vorausgesetzten Steuerbefehlen auch die diesen vorausgeführten Steuerbefehlen zugeordneten Geräteanforderungen mit überprüft bzw. mit berücksichtigt. Mittels der Ausführungsanforderungen wird insbesondere sichergestellt, dass beispielsweise eine Reihenfolge der Fertigungsschritte beim Erstellen eines Produktes eingehalten wird. Es wird damit beispielsweise erreicht, dass die Fertigungsreihenfolge in sinnvoller Weise eingehalten wird. Es wird z. B. verhindert, dass ein Fertigungsschritt durch einen anderen zerstört wird, nur weil die Fertigungsreihenfolge nicht eingehalten wurde. Auf ähnliche Weise kann insbesondere auch eine Steuerung von einem Energieversorgungsnetz gesteuert werden, indem z. B. Transformatoren oder Spannungskoppler in der richtigen Reihenfolge eingeschaltet oder mit dem Energieversorgungsnetz verbunden werden. Werden beispielsweise für das Ausführen von Steuerbefehlen bzw. Steuertransaktionen keine vorausgesetzten Steuerbefehle benötigt, können die vorausgesetzten Steuerbefehle leer sein. Beispielsweise können diese mit einer Null belegt sein, einem Leerstring belegt sein oder einem Wert, der angibt, dass keine vorausgesetzten Steuerbefehle notwendig sind. Alternativ können beispielsweise einem Teil der Steuerbefehle keine Ausführungsanforderung zugeordnet sein, wobei insbesondere zumindest einem der Steuerbefehle zumindest eine Ausführungsanforderung zugeordnet ist. Beispielsweise handelt es sich bei den vorausgesetzten Steuerbefehlen um Steuerbefehle, die z. B. von einem Gerät und/oder Knoten in eine vorgegebene mechanische Bewegung und/oder andere physikalische Größen (z. B. Druck oder Temperatur) umgesetzt wurden oder vor der Abarbeitung der Steuerbefehle umgesetzt sein sollen (z. B. für ein Vorbereiten eines Werkstückes). Mit den vorausgesetzten Steuerbefehlen (sofern diese erfolgreich ausgeführt) wurden dann beispielsweise die Aktoren der Geräte und/oder der Knoten derart angesteuert, dass ein Werkstück in den Zustand bzw. Fertigungszustand versetzt wurde, dass z. B. eine Weiterverarbeitung möglich ist oder nach der Abarbeitung der vorausgesetzten Steuerbefehle ermöglicht wird. Entsprechend können dann z. B. die entsprechenden Geräte/Knoten mit den Steuerbefehlen der Steuertransaktion derart angesteuert werden, dass die Weiterverarbeitung erfolgt (wenn z. B. die vorausgesetzten Steuerbefehle ausgeführt wurden und für diese insbesondere Ausführungsbestätigungsnachrichten vorliegen). Mittels der vorausgesetzten Steuerbefehle und der Geräte und/oder Knoten kann beispielsweise auch ein Regelkreis geregelt und/oder gesteuert werden, indem beispielsweise die Ausführungsbestätigungsnachrichten für ausgeführte/vorausgesetzte Steuerbefehle durch die Vorrichtung oder die Netzwerkapplikation ausgewertet werden und entsprechende Steuerbefehle als Reaktion auf die Ausführungsbestätigungsnachrichten erzeugt werden. Bei den vorausgesetzten Steuerbefehlen kann es sich beispielsweise auch um Steuerbefehle handeln, mit denen ein kryptographisches Gerät und/oder Verfahren angesteuert wurde (z. B. eine Nutzerauthentisierung oder Nutzerauthentifizierung). Alternativ oder zusätzlich kann durch die vorausgesetzten Steuerbefehle beispielsweise eine Erfassung von bestimmten Messgrößen (z. B. durch einen Sensor) vorgegeben sein. Beispielsweise wird damit vorgegeben, dass entsprechende Transaktionen mit entsprechenden Messwerten vorgegebene Messwertbereiche oder Schwellwerte einhalten sollen. Die Messwerte können beispielsweise einen Wert einer gemessenen Größe (z. B. 30 °C) und/oder Datum/Uhrzeit der Erfassung und/oder Ort der Erfassung und/oder Sensortyp und/oder weitere Informationen über den Sensor (z. B. Messgenauigkeit) sein.

Unter einem "separaten und/oder direkten Kommunikationskanal" kann im Zusammenhang mit der Erfindung beispielsweise eine Datenübertragung (z. B. ein Senden, ein Empfangen, ein Übertragen, ein Bereitstellen oder ein Übermitteln) mittels eines Kommunikationskanals verstanden werden, wie dieser beispielsweise durch das Lightning-Netzwerk zunächst nur für die Übertragung von Kryptowährung realisiert ist [9]. Beispielsweise können über diesen Kanal Transaktionen/Nachrichten schneller verschickt werden und eine Bestätigung über diesen Datenaustausch im verteilten Datenbanksystem oder der Netzwerkapplikation gespeichert werden. Damit können beispielsweise wichtige und/oder zeitkritische Steuerbefehle bzw. Steuertransaktionen mit höherer Geschwindigkeit an ein entsprechendes Gerät übertragen werden und dabei z. B. die langsamere Datenübertragung des verteilten Datenbanksystems (z. B. bei der Replikation der Datenblöcke/Transaktionen) oder der Netzwerk-applikation vermieden werden. Beispielsweise können für die Erfindung und die genannten Aspekte, Ausführungsbeispiele, Ausführungsformen der Erfindung und ihre Varianten für eine Datenübertragung zwischen einem Gerät (und/oder Knoten) ein separater und/oder direkter Kommunikationskanal aufgebaut werden. Beispielsweise werden bei einem direkten Kommunikationskanal die Transaktionen/Nachrichten direkt zwischen einem Sender (z. B. das Bereitstellungsmodul und/oder das Bestimmungsmodul) und einem Empfänger (z. B. das Gerät, das die Steuerbefehle ausführen soll) ausgetauscht, ohne dass weitere Knoten und/oder Geräte des verteilten Datenbanksystems oder der Netzwerkapplikation in diesem Datenaustausch involviert sind. Hingegen können bei einem separaten Kommunikationskanal Knoten und/oder Geräte des verteilten Datenbanksystems oder der Netzwerkapplikation in den Datenaustausch involviert sein. Wurde der separate und/oder direkte Kommunikationskanal erfolgreich zwischen dem Sender und dem Empfänger aufgebaut (es wurde also hierdurch insbesondere eine Kommunikationsverbindung etabliert), so können Daten beispielsweise in Form von Transaktionen oder Nachrichten zwischen dem Sender und dem Empfänger ausgetauscht werden. Beispielsweise können die notwendigen Daten für ein Ermitteln der Ausführbarkeit und/oder die Steuertransaktionen zwischen dem Sender und/dem Empfänger ausgetauscht werden. Wird beispielsweise der Kommunikationskanal geschlossen/beendet (also es wird insbesondere eine Kommunikationsverbindung beendet) so wird beispielsweis ein Ergebnis der Datenübertragung z. B. in Form von Transaktionen (z. B. als eine Übertragungsbestätigungstransaktion) in dem verteilten Datenbanksystem gespeichert (z. B. in Datenblöcken des verteilten Datenbanksystems) oder in der Netzwerkapplikation gespeichert. Das Ergebnis der Datenübertragung kann beispielsweise eine Bestätigung der Übertragung oder des Empfangs der entsprechenden Transaktionen/Nachrichten sein und/oder ein Analyseergebnis und/oder die letzte übertragene Transaktion/Nachricht, die über den separaten und/oder direkten Kommunikationskanal übertragen wurde, bevor der Kommunikationskanal geschlossen wurde. Das Speichern der Transaktion mit dem Ergebnis kann beispielsweise durch den Sender und/oder Empfänger erfolgen. Bei dem Analyseergebnis kann es sich beispielsweise um die Bestätigung der Ausführbarkeit der Steuerbefehle durch ein Gerät handeln, wobei beispielsweise ein entsprechendes Gerät bestätigt hat, dass es die Steuerbefehle ausführen kann. Dies kann beispielsweise wiederum in einer Transaktion (z. B. in einer Ausführbarkeitsbestätigungstransaktion oder in eine Bestätigungsnachricht) gespeichert werden und z. B. in den Ausführungsanforderungen (z. B. in den gerätespezifischen Anforderungen) gespeichert werden. Alternativ oder zusätzlich wird eine Ausführbarkeitsbestätigungstransaktion in dem verteilten Datenbanksystem oder der Netzwerkapplikation gespeichert. Die Ausführbarkeitsbestätigungstransaktion umfasst dabei beispielsweise einen eindeutigen Identifizierer für das Gerät, das in der Lage ist, die Steuerbefehle auszuführen bzw. die entsprechenden Ausführungsanforderungen erfüllt. Alternativ oder zusätzlich umfasst die Ausführbarkeitsbestätigungstransaktion beispielsweise Daten über die Ausführung z. B. wie gut bzw. zu welchem Grad die Ausführungsanforderungen erfüllt werden (z. B. wie schnell die Steuerbefehle abgearbeitet sind, wann diese sicher abgearbeitet sind, wie genau oder präzise die Steuerbefehle ausgeführt werden - beispielsweise beim Ausführen von Fertigungssteuerbefehlen). Alternativ oder zusätzlich umfasst die Ausführbarkeitsbestätigungstransaktion beispielsweise gerätespezifische Daten des entsprechenden Gerätes, die für die Ausführung der Steuerbefehle relevant sind, wobei z. B. die gerätespezifische Daten von dem entsprechenden Gerät zum Zeitpunkt der Bestätigung der Ausführbarkeit durch das Gerät ermittelt wurden. Dabei erfolgt z. B. die Bestätigung der Ausführbarkeit und die Ermittlung der gerätespezifischen Daten (in etwa) zum gleichen Zeitpunkt - beispielsweise innerhalb eines Zeitfensters von wenigen Sekunden oder Minuten. Beispielsweise können die Daten der Ausführbarkeitsbestätigungstransaktion auch zwischen dem Sender und dem Empfänger ausgetauscht worden sein, bevor die Ausführbarkeitsbestätigungstransaktion z. B. in dem verteilten Datenbanksystem oder der Netzwerkapplikation gespeichert wird. Die Ausführbarkeitsbestätigungstransaktion kann beispielsweise noch kryptographisch geschützt sein (z. B. kann diese verschlüsselt sein oder durch eine Transaktionsprüfsumme geschützt sein). Auch können beispielsweise die Steuertransaktionen auf analoge Weise an das entsprechende Gerät übertragen werden, das die Steuerbefehle ausfühlen soll bzw. kann. Hierzu kann beispielsweise ein weiterer separater und/oder direkter Kommunikationskanal zwischen dem Sender und dem Empfänger aufgebaut werden. Alternativ kann der oben genannte Kommunikationskanal beispielsweise weiterverwendet werden. Über den entsprechenden Kommunikationskanal werden dann beispielsweise die entsprechenden Steuertransaktionen an das entsprechende Gerät übertragen. Wird beispielsweise der Kommunikationskanal wieder geschlossen/beendet, wenn die Übertragung (erfolgreich) abgeschlossen wurde, wird das Ergebnis der Übertragung z. B. als eine Übertragungsbestätigungstransaktion in dem verteilten Datenbanksystem oder der Netzwerkapplikation gespeichert. Auch kann beispielsweise die zuletzt über den Kommunikationskanal ausgetauschte Nachricht in der Übertragungsbestätigungstransaktion gespeichert werden (z. B. falls der Kommunikationskanal unterbrochen wird) und die Übertragungsbestätigungstransaktion z. B. dann im verteilten Datenbanksystem oder in der Netzwerkapplikation gespeichert werden. Diese zuletzt ausgetauschte Nachricht kann beispielsweise verwendet werden, um bei einem erneuten Aufbau des Kommunikationskanals den Datenaustausch bzw. die Datenübertragung fortzusetzen. Die Übertragungsbestätigungstransaktion kann beispielsweise auch kryptographisch geschützt sein. Die Übertragungsbestätigungstransaktion kann beispielsweise die Steuerbefehle und/oder die Steuertransaktion und/oder die letzte ausgetauschte Nachricht zwischen dem Sender und dem Empfänger umfassen. Eine Fortsetzung des Datenaustausches bzw. der Datenübertragung kann beispielsweise auch für andere Datenübertragungen genutzt werden und ist nicht speziell auf die Datenübertragung bzw. den Datenaustausch von Steuertransaktionen beschränkt.

Der separate und/oder direkte Kommunikationskanal ist dahingehend vorteilhaft, um eine Übertragungsgeschwindigkeit und/oder Übertragungslatenzzeit zu verbessern. Es ist beispielsweise auch ein Hybridverfahren möglich, indem beispielsweise ein entsprechender Kommunikationskanal für zeitkritische Steuerbefehle (z. B. mit hoher Priorität) genutzt wird. Beispielsweise kann anhand der Ausführungsanforderungen (z. B. es sind zeitkritische Steuerbefehle oder Steuerbefehle für eine Echtzeitanwendung) bestimmt werden, ob es sich um entsprechende Steuerbefehle handelt, die über einen entsprechenden separaten Kommunikationskanal übertragen werden sollen. Alternativ oder zusätzlich kann das Bestimmungsmodul beispielsweise beim Bestimmen der Ausführungsanforderungen entsprechende Übertragungsanforderungen für eine Datenübertragung der Steuertransaktionen bestimmen. Die Übertragungsanforderungen können beispielsweise in den Ausführungsanforderungen gespeichert werden. Anhand der Übertragungsanforderungen kann dann beispielsweise das Bereitstellungsmodul ermitteln, ob die Steuertransaktionen über eine Übertragung an das entsprechende Gerät in dem verteilten Datenbanksystem oder der Netzwerkapplikation gespeichert werden oder ob der separate und/oder direkte Kommunikationskanal für eine Datenübertragung an das entsprechende Gerät genutzt wird. Die Datenübertragung kann dann beispielsweise durch das Bereitstellungsmodul der Vorrichtung erfolgen, das hierzu z. B. ein entsprechendes Kommunikationsmodul (z. B. eine Netzwerkschnittstelle) umfasst.

Die Erfindung ist dahingehend vorteilhaft, um beispielsweise eine Blockkette, eine Netzwerkapplikation oder ein verteiltes Datenbanksystem z. B. als industrielle Kommunikationsinfrastruktur und/oder Steuerungsplattform z. B. im Fertigungsbereich einzusetzen. Hierdurch kann insbesondere eine Fertigungsinfrastruktur realisiert werden, bei der Geräte (z. B. autonome Geräte) von unterschiedlichen Betreibern in einer vertrausunwürdigen Umgebung eine Vertrauensbasis benötigen, um einen Fertigungsauftrag abzuarbeiten (Trust in a trustless environment). Hierbei können z. B. durch die Konfigurierbarkeit und die Auswählbarkeit der Validierung und/oder Übertragung beispielsweise zeitliche Anforderungen vorgegeben werden. Das verteilte Datenbanksystem validiert z. B. nur diejenigen Transaktionen, die von einem entsprechenden blockkettenbasierten Fertigungssystem bzw. den entsprechenden Geräten ausgeführt werden können, indem z. B. eine vorgegebene Anzahl von Knoten bestätigen, dass sie diese Transaktionen ausführen.

Beispielsweise ist es auch möglich, dass die vorgegebene Anzahl von Knoten, zumindest zum Teil oder vollständig Knoten Knoten eines Shards sind (z. B. eines Etherium-Shards). Alternativ ist es auch möglich, dass die vorgegebene Anzahl von Knoten, zumindest zum Teil Knoten von unterschiedlichen Shards sind. Die jeweiliegen Shards einer Netzwerkapplikation (z. B. eines verteilten Datenbanksystems wie einer Blockkette) können spezifisch für Knoten in Form Geräten gebildet werden, indem z. B. die Knoten eines Shards durch die Geräteeigenschaften (z. B. Fertigungsgerät, Prüfgerät, sicheres Gerät oder Gerät mit hoher Zuverlässigkeit oder Fertigungspräzision) gebildet werden.

Die Erfindung eignet sich insbesondere für IoT Anwendungen der Blockkette, bei der z. B. zumindest ein Gerät irgendeine Steueraktion ausführen soll, wobei die Ausführung gewissen Ausführungsanforderungen unterworfen ist.

Mittels der Erfindung können konventionelle Blockketten z. B. dahingehend verbessert werden, um die Ausführbarkeit von Transaktionen zu verbessern oder zu verhindern, dass nicht ausführbare Transaktionen in der Blockkette gespeichert werden. Dies ist insbesondere, wenn die Steuertransaktionen bzw. die Steuerbefehle einen Smart-Contract kodieren bzw. umfassen, da es z. B. einen Bedarf dahingehend gibt, vorzugsweise ausführbare Smart-Contracts in einer Blockkette zu speichern.

Bei einer ersten Ausführungsform der Vorrichtung erfolgt beim Bereitstellen eine Validierung der Steuertransaktion oder der Steuertransaktionen anhand der entsprechenden Bestätigungsnachrichten. Dies ist dahingehend vorteilhaft, um z. B. sicherzustellen, dass eine Blockkette nur validierte Transaktionen umfasst, die auch ausgeführt werden können. Bei weiteren Ausführungsformen der Vorrichtung ist das Bestätigungsmodul dazu eingerichtet die Transaktion und/oder die Steuerbefehle anhand der Bestätigungsnachrichten zu selektieren und als selektierte Steuertransaktion oder als mehrere selektierte Steuertransaktionen bereitzustellen.

Bei weiteren Ausführungsformen der Vorrichtung ist das Bestätigungsmodul dazu eingerichtet die Transaktion und/oder die Steuerbefehle anhand der Bestätigungsnachrichten zu markieren und als markierte Steuertransaktion oder als mehrere markierte Steuertransaktionen bereitzustellen.

Bei weiteren Ausführungsformen der Vorrichtung umfasst die Anfragenachricht Ausführungsanforderungen für eine Ausführung der Steuerbefehle durch das Gerät oder die Geräte. Alternativ oder zusätzlich werden die Ausführungsanforderungen durch die Steuerbefehle und/oder durch die Transaktion und/oder durch eine Policy vorgegeben. Alternativ oder zusätzlich geben die Ausführungsanforderungen Geräteanforderungen für das Gerät oder die Geräte vor. Alternativ oder zusätzlich geben die Ausführungsanforderungen vorausgeführte Steuerbefehle für eine Ausführung der Steuerbefehle durch das Gerät oder die Geräte vor. Alternativ oder zusätzlich umfassen die Ausführungsanforderungen eine Zeitanforderung, die eine von einem entsprechenden Gerät garantierte Abarbeitungszeit vorgeben.

Hierdurch erfolgt beispielsweise die Validierung unter der Berücksichtigung von Vorgaben, welche die Ausführungsanforderungen an eine Ausführung entsprechender Steuerbefehle durch Geräte stellen. Hierzu können beispielsweise die Ausführungsanforderungen mit der Anfragenachricht an entsprechende Geräte übermittelt werden, die zumindest einen Teil der Ausführungsanforderungen, die z. B. bereits durch das Bestimmungsmodul überprüfbar sind, erfüllen. In den Bestätigungsnachrichten bestätigt z. B. ein Gerät, dass es zumindest einen Teil der Steuerbefehle ausführen kann, wenn es z. B. die entsprechenden Steuerbefehle unter einer Einhaltung der diesen Steuerbefehlen zugeordneten Ausführungsanforderungen ausführen kann. Die Abarbeitungszeit gibt dabei beispielsweise eine Abarbeitungsgeschwindigkeit für die Steuerbefehle vor. Alternativ oder zusätzlich kann z. B. die Abarbeitungszeit einen Zeitpunkt vorgeben, wann die Steuerbefehle abgearbeitet sein müssen. Alternativ oder zusätzlich kann z. B. die Abarbeitungszeit ein Zeitverhalten vorgeben, das bei der Abarbeitung der Steuerbefehle eingehalten sein muss. Das Zeitverhalten kann z. B. vorgeben, dass die Steuerbefehle unter Echtzeitbedingungen ausgeführt werden.

Die Ausführungsanforderungen können z. B. zumindest zum Teil durch die Transaktion oder die Steuerbefehle vorgegeben sein. Alternativ oder zusätzlich können die Ausführungsanforderungen z. B. zumindest zum Teil berechnet werden (z. B. durch das Bestimmungsmodul). Alternativ oder zusätzlich können die Ausführungsanforderungen z. B. zumindest zum Teil durch die Policy vorgegeben sein, wobei die Policy beispielsweise durch die Netzwerkapplikation vorgegeben wird oder fest konfiguriert ist (z. B. im Genesisblock). Alternativ oder zusätzlich können die Ausführungsanforderungen z. B. zumindest zum Teil anhand der Steuerbefehle oder der Transaktion berechnet werden (z. B. durch das Bestimmungsmodul), wobei hierfür beispielsweise Mindestanforderungen für eine Ausführung der Steuerbefehle berechnet werden. Alternativ oder zusätzlich können die Ausführungsanforderungen zumindest zum Teil eine Priorität über die Ausführung der Steuerbefehle umfassen. Alternativ oder zusätzlich können die Ausführungsanforderungen die geforderte Abarbeitungszeit umfassen. Alternativ oder zusätzlich können die Ausführungsanforderungen die geforderte Ausführungskosten umfassen. Alternativ oder zusätzlich können die Ausführungsanforderungen Vorgaben über Ausführungskosten (z. B. Energieverbrauch oder finanzielle Kosten) bei der Ausführung bzw. Abarbeitung der Steuerbefehle umfassen. Alternativ oder zusätzlich können die Ausführungsanforderungen eine Gerätezuverlässigkeit für ein Gerät vorgeben, damit z. B. ein Ausfall eines Gerätes oder ein Defekt eines Gerätes bei der Ausführung bzw. Abarbeitung der Steuerbefehle unwahrscheinlich ist.
Es ist beispielsweise auch möglich, dass die Steuerbefehle oder die Steuertransaktion anhand einer vorgegebenen Optimierungsgröße durch das Bestimmungsmodul oder durch die Bereitstellungsvorrichtung optimiert werden. Die Optimierungsgröße kann dabei die Priorität der Steuerbefehle und/oder die Ausführungszeit und/oder die Abarbeitungszeit und/oder der Ausführungszeitraum und/oder die Geräteauslastung und/oder die Gerätezuverlässigkeit sein.

Bei weiteren Ausführungsformen der Vorrichtung umfasst eine entsprechende Bestätigungsnachricht aktuelle Geräteeigenschaften des Gerätes, das beispielsweise die entsprechende Bestätigungsnachricht gesendet hat.

Die aktuellen Geräteeigenschaften können beispielsweise als gerätespezifische Daten oder als aktuelle Gerätezustand übermittelt werden.

Bei weiteren Ausführungsformen der Vorrichtung umfasst das Bestimmungsmodul für das Gerät oder zumindest für einen Teil der Geräte Geräteeigenschaften. Alternativ oder zusätzlich bestimmt das Bestimmungsmodul anhand der Geräteeigenschaften und/oder der Ausführungsanforderungen und/oder der Transaktion und/oder der Steuerbefehle das Gerät oder die Geräte, an welche die Anfragenachricht übermittelt wird. Alternativ oder zusätzlich werden die Geräteeigenschaften eines entsprechenden Gerätes im Bestimmungsmodul bei einer Änderung der Geräteeigenschaften aktualisiert.

Bei weiteren Ausführungsformen der Vorrichtung ist eine Anzahl von Bestätigungsnachrichten für einen Steuerbefehl der Steuerbefehle und/oder zumindest einen Teil der Steuerbefehle und/oder ausgewählte Steuerbefehle der Steuerbefehle vorgegeben. Alternativ oder zusätzlich bestätigt die vorgegebene Anzahl von Bestätigungsnachrichten eine Ausführung der entsprechenden Steuerbefehle auf mehreren unterschiedlichen Geräten. Die vorgegebene Anzahl kann z. B. für unterschiedliche Steuerbefehle in den Ausführungsanforderungen gespeichert sein bzw. die Ausführungsanforderungen umfassen diese Information.

Bei weiteren Ausführungsformen der Vorrichtung wird nach einer Ausführung von entsprechenden Steuerbefehlen durch ein entsprechendes Gerät, eine Ausführungsbestätigungsnachricht gespeichert.

Beispielsweise kann die Ausführungsbestätigungsnachricht eine Angabe darüber umfassen, ob die Steuerbefehle vollständig ausgeführt wurden, ob die Steuerbefehle teilweise ausgeführt wurden oder ob die Steuerbefehle gar nicht ausgeführt wurden. Beispielsweise ist in der Ausführungsbestätigungsnachricht gespeichert, welche Steuerbefehle ausgeführt wurden und welche Steuerbefehle nicht ausgeführt wurden.

Bei weiteren Ausführungsformen der Vorrichtung umfasst die Vorrichtung ein Bestätigungsmodul. Alternativ oder zusätzlich ist das Bestätigungsmodul dazu eingerichtet die Ausführung der Steuerbefehle und/oder Steuertransaktionen zu bestätigen, wobei das Bestätigen beispielsweise anhand der Ausführungsbestätigungsnachricht und/oder anhand der Ausführungsanforderungen erfolgt.

Bei weiteren Ausführungsformen der Vorrichtung ist das Bestimmungsmodul dazu eingerichtet, bei einer Nichteinhaltung der Ausführungsanforderungen und/oder bei einer erfolglosen Ausführung einer entsprechenden Steuertransaktion oder entsprechender Steuerbefehle durch ein entsprechendes Gerät, die entsprechende Steuertransaktion oder die entsprechenden Steuerbefehle an ein weiteres Gerät zur Ausführung zu übermitteln, das z. B. für die entsprechenden Steuerbefehle oder für die entsprechende Steuertransaktion eine Bestätigungsnachricht geschickt hat.

Bei weiteren Ausführungsformen der Vorrichtung wird anhand der Bestätigungsnachrichten eine Reihenfolge für die Abarbeitung der Steuertransaktionen durch das Bestimmungsmodul bestimmt.

Bei weiteren Ausführungsformen der Vorrichtung ist das Gerät und/oder die Geräte und/oder die Vorrichtung jeweils als ein Knoten oder als mehrere Knoten einer Netzwerkapplikation, die z. B. mittels eines verteilten Datenbanksystems, wie z. B. einer Blockkette, realisiert ist. Die durch das erste Empfangsmodul empfangene Transaktion kann beispielsweise eine unvalidierte Transaktion sein, die z. B. durch die Vorrichtung als validierte Transaktion (z. B. als Steuertransaktion) in der Netzwerkapplikation oder durch die Netzwerkapplikation gespeichert werden soll. Die Anfragenachricht und/oder die Bestätigungsnachricht und/oder die Ausführungsbestätigungsnachricht können beispielsweise jeweils als Transaktion der Netzwerkapplikation sein oder beispielsweise Nachrichten sein, die über einen separaten Kommunikationskanal zwischen der Vorrichtung (z. B. ein Knoten einer Blockkette) und einem der entsprechenden Geräte (z. B. ein Knoten einer Blockkette) übertragen werden.

Gemäß einem weiteren Aspekt betrifft die Erfindung ein Gerät aufweisend:
- ein erstes Empfangsmodul, wobei das erste Empfangsmodul dazu eingerichtet ist eine Anfragenachricht zur Ausführung von Steuerbefehlen zu empfangen;
- ein Überprüfungsmodul, wobei das Überprüfungsmodul dazu eingerichtet ist ein Prüfergebnis über die Ausführbarkeit der Steuerbefehle durch das Gerät zu ermitteln;
- ein Sendemodul, wobei das Sendemodul dazu eingerichtet ist eine Bestätigungsnachricht für die Ausführbarkeit der Steuerbefehle durch das Gerät anhand des Prüfergebnisses zu senden.

Gemäß einem weiteren Aspekt betrifft die Erfindung ein Gerät aufweisend:
- ein erstes Empfangsmodul, wobei das erste Empfangsmodul dazu eingerichtet ist eine Anfragenachricht zur Ausführung von Steuerbefehlen zu empfangen;
- ein Überprüfungsmodul, wobei das Überprüfungsmodel dazu eingerichtet ist ein Prüfergebnis über die Ausführbarkeit der Steuerbefehle durch das Gerät zu ermitteln;
- ein Sendemodul, wobei das Sendemodul dazu eingerichtet ist eine Bestätigungsnachricht für die Ausführbarkeit der Steuerbefehle durch das Gerät anhand des Prüfergebnisses zu senden;
- ein zweites Empfangsmodul, wobei das zweite Empfangsmodul dazu eingerichtet ist die Steuerbefehle und/oder eine Steuertransaktion mit den Steuerbefehlen zu empfangen;
- ein Ausführungsmodul, wobei
   o das Ausführungsmodul dazu eingerichtet ist die Steuerbefehle und/oder die Steuertransaktion auszuführen.

Das Ausführungsmodul kann beispielsweise zudem dazu eingerichtet sein, eine Ausführungsbestätigungsnachricht über die Ausführung der Steuerbefehle bereitzustellen. Hierfür kann die Ausführungsbestätigungsnachricht z. B. an die Vorrichtung übertragen werden und/oder von der Netzwerkapplikation gespeichert werden.

In weiteren Ausführungsformen des Gerätes empfängt das erste Empfangsmodul zusätzlich Ausführungsanforderungen für die entsprechenden Steuerbefehle.

In weiteren Ausführungsformen des Gerätes wird die Ausführbarkeit der Steuerbefehle anhand von Geräteeigenschaften des Gerätes und/oder anhand der Ausführungsanforderungen für die entsprechenden Steuerbefehle ermittelt und beispielsweise im Prüfergebnis gespeichert. Hierzu umfasst das Gerät vorzugsweise einen Konfigurationsspeicher, der die Geräteeigenschaften umfasst, wobei die Geräteeigenschaften beispielsweise für das Gerät und/oder durch das Gerät aktualisiert werden, wenn sich die Geräteeigenschaften verändern. Beispielsweise werden die Geräteeigenschaften oder die aktualisierten Geräteeigenschaften der Vorrichtung bereitgestellt oder die Vorrichtung übertragen. Dies kann beispielsweise nach einer Aktualisierung der Geräteeigenschaften erfolgen. Beispielsweise werden zum Bestimmen der Ausführbarkeit die Geräteeigenschaften des Gerätes mit Geräteanforderungen der Ausführungsanforderungen für eine Ausführung der Steuerbefehle durch das Gerät verglichen. Halten beispielsweise die Geräteeigenschaften des Gerätes die Geräteanforderungen ein, wird beispielsweise die Ausführbarkeit in dem Prüfergebnis bestätigt. Die Bestätigungsnachricht umfasst dann vorzugsweise eine Bestätigung über die Ausführbarkeit der Steuerbefehle durch das Gerät. Diese Bestätigungsnachricht wird vorzugsweise an die Vorrichtung übermittelt z. B. über eine Netzwerkapplikation, die z. B. mittels eines verteilten Datenbanksystems, wie eine Blockkette, realisiert ist.

In weiteren Ausführungsformen des Gerätes umfasst die Bestätigungsnachricht einen Ausführungszeitraum oder einen Ausführungszeitpunkt, die z. B. angeben, wann die Steuerbefehle durch das Gerät ausgeführt sind oder wann die Steuerbefehle durch das Gerät abgearbeitet sind.

In weiteren Ausführungsformen des Gerätes ist das Gerät und/oder die Vorrichtung jeweils als ein Knoten oder mehrere Knoten einer Netzwerkapplikation, die z. B. mittels eines verteilten Datenbanksystems, wie einer Blockkette, realisiert ist. Die Anfragenachricht und/oder die Bestätigungsnachricht und/oder die Ausführungsbestätigungsnachricht können beispielsweise Transaktionen der Netzwerkapplikation sein oder beispielsweise Nachrichten sein, die über einen separaten Kommunikationskanal zwischen der Vorrichtung (z. B. ein Knoten einer Blockkette) und dem Gerät (z. B. ein Knoten einer Blockkette) übertragen werden.

Gemäß einem weiteren Aspekt betrifft die Erfindung ein System, das eine erfindungsgemäße Vorrichtung oder eine der Ausführungsformen der Vorrichtung umfasst und ein erfindungsgemäßes Gerät oder mehrere erfindungsgemäße Geräte oder Ausführungsformen dieser Geräte umfasst.

In weiteren Ausführungsformen des Systems, der Vorrichtung oder des Gerätes sind das Gerät und/oder die Geräte und/oder die Vorrichtung jeweils ein Knoten oder mehrere Knoten einer Netzwerkapplikation. Alternativ oder zusätzlich ist die Netzwerkapplikation ein verteiltes Datenbanksystem wie eine Blockkette. Alternativ oder zusätzlich ist die durch das erste Empfangsmodul empfangene Transaktion eine unvalidierte Transaktion. Alternativ oder zusätzlich sind die Anfragenachricht und/oder die Bestätigungsnachricht und/oder die Ausführungsbestätigungsnachricht jeweils eine Transaktion der Netzwerkapplikation und/oder Nachrichten, die über einen separaten Kommunikationskanal zwischen der Vorrichtung und einem der entsprechenden Geräte übertragen werden.

Gemäß einem weiteren Aspekt betrifft die Erfindung ein computerimplementiertes Verfahren zum Bereitstellen einer Steuertransaktion mit folgenden Verfahrensschritten:
- Empfangen einer Transaktion, wobei
   o die Transaktion Steuerbefehle umfasst;
- Bestimmen eines Gerätes oder von mehreren Geräten, die jeweils die Steuerbefehle ganz oder teilweise ausführen;
- Übermitteln einer Anfragenachricht zur Ausführung der entsprechenden Steuerbefehle an das Gerät oder die mehreren Geräte;
- Empfangen von Bestätigungsnachrichten, wobei
   o die Bestätigungsnachrichten Antworten des Gerätes oder der mehreren Geräte auf die Anfragenachricht sind;
   o Bereitstellen der Transaktion und/oder der Steuerbefehle als Steuertransaktion oder als mehrere Steuertransaktionen anhand der Bestätigungsnachrichten.

Bei weiteren Ausführungsformen des Verfahrens umfasst das Verfahren weitere Verfahrensschritte oder Merkmale der Vorrichtung, um z. B. die funktionalen Merkmale der Vorrichtung oder der Ausführungsformen der Vorrichtung als Verfahren zu realisieren.

Gemäß einem weiteren Aspekt betrifft die Erfindung ein computerimplementiertes Verfahren zum Ausführen einer Steuertransaktion durch ein Gerät mit folgenden Verfahrensschritten:
- Empfangen einer Anfragenachricht zur Ausführung von Steuerbefehlen durch ein Gerät;
- Ermitteln eines Prüfergebnisses über eine Ausführbarkeit der Steuerbefehle durch das Gerät;
- Senden einer Bestätigungsnachricht für die Ausführbarkeit der Steuerbefehle durch das Gerät anhand des Prüfergebnisses;
- Empfangen der Steuerbefehle und/oder einer Steuertransaktion mit den Steuerbefehlen;
- Ausführen der Steuerbefehle und/oder der Steuertransaktion.

Bei weiteren Ausführungsformen des Verfahrens umfasst das Verfahren weitere Verfahrensschritte oder Merkmale des Gerätes, um z. B. die funktionalen Merkmale des Gerätes oder der Ausführungsformen des Gerätes als Verfahren zu realisieren.

Gemäß einem weiteren Aspekt betrifft die Erfindung ein computerimplementiertes Verfahren zum Ausführen einer Steuertransaktion durch ein Gerät mit folgenden Verfahrensschritten:
- Empfangen einer Anfragenachricht zur Ausführung von Steuerbefehlen durch ein Gerät;
- Ermitteln eines Prüfergebnisses über eine Ausführbarkeit der Steuerbefehle durch das Gerät;
- Senden einer Bestätigungsnachricht für die Ausführbarkeit der Steuerbefehle durch das Gerät anhand des Prüfergebnisses.

Bei weiteren Ausführungsformen des Verfahrens umfasst das Verfahren weitere Verfahrensschritte oder Merkmale des Gerätes, um z. B. die funktionalen Merkmale des Gerätes oder der Ausführungsformen des Gerätes als Verfahren zu realisieren. Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass das genannte erfindungsgemäße Gerät oder die erfindungsgemäße Vorrichtung erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es das erfindungsgemäße Gerät oder die erfindungsgemäße Vorrichtung erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung;
- Fig. 4: ein weiteres Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware (komponenten) oder ausschließlich per Software (komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne, dass dies expliziert in dem jeweiligen Ausführungsbeispiel genannt sein muss.

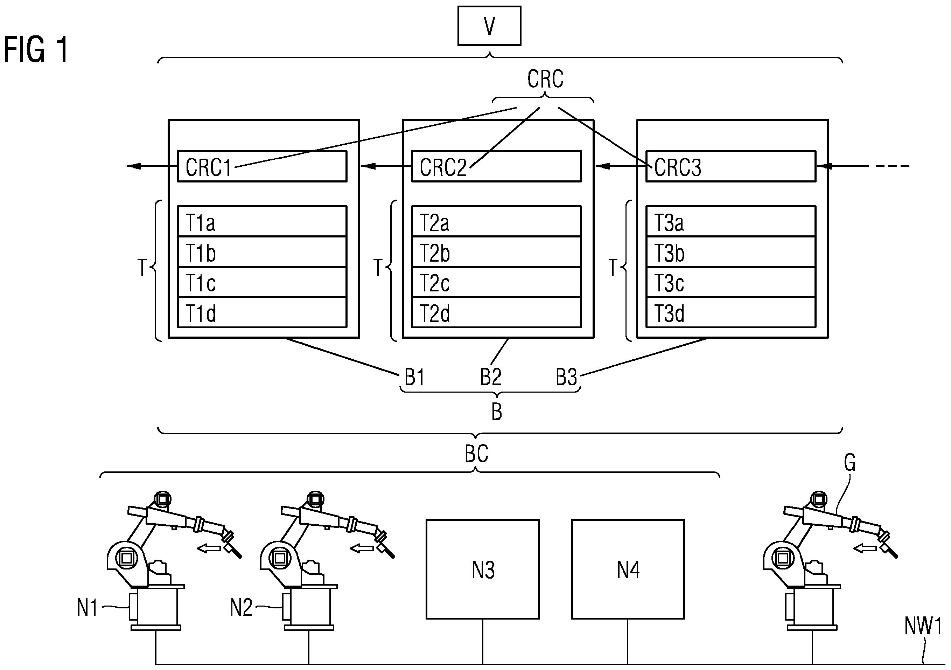

Fig. 1 zeigt ein cyberphysikalisches System, das eine Netzwerk-Applikation und deren Infrastruktur umfasst.

Das in Fig. 1 gezeigte System kann beispielsweise eine Netzwerk-Applikation in Form einer Blockkette oder ein verteiltes Datenbanksystem umfassen, wobei das verteilte Datenbanksystem z. B. mittels einer Blockkette BC realisiert ist.

In Fig. 1 sind ein erster Knoten N1 (z. B. ein erstes Gerät wie ein Fertigungsroboter), ein zweiter Knoten N2 (z. B. ein zweites Gerät wie ein Fertigungsroboter), ein dritter Knoten N3 (z. B. ein drittes Gerät) und ein vierter Knoten N4 (z. B. ein viertes Gerät) gezeigt, die die Knoten der Blockkette BC des verteilten Datenbanksystems beispielshaft bilden, wobei einer der Knoten, z. B. der erste Knoten N1, das Gerät ist, das mittels der Transaktion gesteuert werden soll. Die Knoten sind dabei z. B. über ein erstes Kommunikationsnetzwerk NW1 miteinander verbunden. Das verteilte Datenbanksystem kann zudem noch eine Vielzahl weiterer Knoten umfassen. Mit anderen Worten sind eine Vielzahl von Geräten (die Knoten N1 - N4 und ein externes Gerät) in Fig. 1 gezeigt, die mittels der Netzwerkapplikation in Form eines verteilten Datenbanksystems kommunikativ verbunden sind.

Zudem umfasst das verteilte Datenbanksystem eine Vorrichtung V. Die Vorrichtung V umfasst ein erstes Empfangsmodul, ein Bestimmungsmodul, ein zweites Empfangsmodul und eine Bereitstellungsmodul, die z. B. über einen Bus miteinander kommunikativ verbunden sind.

Das erste Empfangsmodul ist zum Empfangen von einer Transaktion eingerichtet, wobei die Transaktion Steuerbefehle umfasst. Die Steuerbefehle sollen dabei von z. B. dem ersten Gerät (z. B. der erste Knoten N1) oder mehreren weiteren Geräten ausgeführt werden (z. B. von dem zweiten Knoten N2 und/oder von dem dritten Knoten N3 und/oder von dem vierten Knoten N4 und/oder von dem externen Gerät G).

Das Bestimmungsmodul ist dazu eingerichtet, ein Gerät aus der Vielzahl der Geräte oder mehrere Geräte aus der Vielzahl der Geräte zu bestimmen, die jeweils die Steuerbefehle ganz oder teilweise ausführen. Das Bestimmungsmodul ist zudem dazu eingerichtet, an das Gerät oder die mehreren Geräte eine Anfragenachricht zur Ausführung der entsprechenden Steuerbefehle zu übermitteln. Die Anfragenachricht kann zudem noch Ausführungsanforderungen für eine Ausführung der Steuerbefehle durch entsprechende Geräte und/oder die auszuführenden Steuerbefehle umfassen. Die Ausführungsanforderungen kann beispielsweise das erste Empfangsmodul für die entsprechenden Steuerbefehle empfangen oder die Ausführungsanforderungen sind beispielsweise in der Transaktion gespeichert oder die Ausführungsanforderungen wurden durch eine Policy vorgegeben oder die Ausführungsanforderungen wurden durch das Bestimmungsmodul für die jeweiligen Steuerbefehle berechnet.

Die Ausführungsanforderungen werden beispielsweise durch das erste Empfangsmodul für die entsprechenden Steuerbefehle zumindest zum Teil empfangen und/oder die Ausführungsanforderungen sind beispielsweise in der Transaktion zumindest zum Teil gespeichert und/oder die Ausführungsanforderungen wurden durch eine Policy zumindest zum Teil vorgegeben oder die Ausführungsanforderungen wurden durch das Bestimmungsmodul für die jeweiligen Steuerbefehle zumindest zum Teil berechnet. Dies ist vorteilhaft, um Ausführungsanforderungen dynamisch während eines Fertigungsprozesses automatisiert zu konfigurieren. Durch die Transaktionen können beispielsweise zunächst allgemein gehaltene Ausführungsanforderungen vorgegeben werden (z. B. eine Fertigungsdauer für ein Werkstück 4 beträgt nicht mehr als 4 Stunden). Das Bestimmungsmodul bestimmt nun anhand von Geräteeigenschaften der Vielzahl der Geräte spezifische Geräteanforderungen (z. B. UID des Gerätes), um z. B. bestimmte einzelne Steuerbefehle durch ausgewählte Geräte auszuführen.

In weiteren Varianten können die Ausführungsanforderungen können z. B. zumindest zum Teil durch die Transaktion oder die Steuerbefehle vorgegeben sein. Alternativ oder zusätzlich können die Ausführungsanforderungen z. B. zumindest zum Teil berechnet werden (z. B. durch das Bestimmungsmodul). Alternativ oder zusätzlich können die Ausführungsanforderungen z. B. zumindest zum Teil durch die Policy vorgegeben sein, wobei die Policy beispielsweise durch die Netzwerkapplikation vorgegeben wird oder fest konfiguriert ist (z. B. im Genesisblock). Alternativ oder zusätzlich können die Ausführungsanforderungen z. B. zumindest zum Teil anhand der Steuerbefehle oder der Transaktion berechnet werden (z. B. durch das Bestimmungsmodul), wobei hierfür beispielsweise Mindestanforderungen für eine Ausführung der Steuerbefehle berechnet werden. Alternativ oder zusätzlich können die Ausführungsanforderungen zumindest zum Teil eine Priorität über die Ausführung der Steuerbefehle umfassen. Alternativ oder zusätzlich können die Ausführungsanforderungen die geforderte Abarbeitungszeit umfassen. Alternativ oder zusätzlich können die Ausführungsanforderungen die geforderte Ausführungskosten umfassen. Alternativ oder zusätzlich können die Ausführungsanforderungen Vorgaben über Ausführungskosten (z. B. Energieverbrauch oder finanzielle Kosten) bei der Ausführung bzw. Abarbeitung der Steuerbefehle umfassen. Alternativ oder zusätzlich können die Ausführungsanforderungen eine Gerätezuverlässigkeit für ein Gerät vorgeben, damit z. B. ein Ausfall eines Gerätes oder ein Defekt eines Gerätes bei der Ausführung bzw. Abarbeitung der Steuerbefehle unwahrscheinlich ist.

Mittels der Priorität können z. B. die Ausführung bzw. Abarbeitung der entsprechenden Steuerbefehle gesteuert werden (z. B. durch ein Priorisieren von entsprechenden Steuerbefehlen).

Ein Gerät bestätigt beispielsweise in einer entsprechenden Bestätigungsnachricht, dass es unter einer Einhaltung der Priorität die entsprechenden Steuerbefehle bzw. Steuertransaktion ausführen kann.

Mit anderen Worten bestätigt das Gerät, dass es die entsprechenden Steuerbefehle unter Einhaltung der Priorität der zugehörigen Ausführungsanforderungen ausführt. Beispielsweise werden Steuertransaktionen bzw. Steuerbefehle mit einer hohen Priorität bevorzugt ausgeführt. Beispielsweise kann ein Gerät aber auch bestätigen, dass es priorisierte Steuerbefehle verarbeiten kann oder die Priorität in den Steuerbefehlen ggf. berücksichtigen kann. Eine solche Priorität kann sich z. B. auch darauf beziehen, dass die Abarbeitung von Steuerbefehlen oder Steuertransaktionen von einem Gerät ggf. durch Steuerbefehle oder Steuertransaktionen mit höherer Priorität unterbrochen werden können. Auch diese Art von Anforderungen an die Verarbeitungsfähigkeit (z. B. in den Geräteeigenschaften gespeichert) kann in den Ausführungsanforderungen (z. B. Geräteanforderungen) gespeichert werden.

"Bevorzugt" bedeutet im genannten Beispiel insbesondere, dass die entsprechenden Steuerbefehle schneller oder vor anderen nicht-bevorzugten Steuerbefehlen (z. B. Steuerbefehle mit einer niedrigen Priorität) abgearbeitet werden (z. B. durch die Geräte oder das verteilte Datenbanksystem). Diese zu bevorzugenden Steuerbefehle oder kurz bevorzugten Steuerbefehle können beispielsweise wichtige/kritische Steuerbefehle sein, die unmittelbar ausgeführt werden müssen, um beispielsweise Geräteschäden, Infrastrukturschäden oder Personenschäden zu vermeiden. Stellt beispielsweise ein Überwachungsgerät, das insbesondere ebenfalls ein Knoten des verteilten Datenbanksystems ist, fest, dass das entsprechende Gerät, z. B. ein Fertigungsgerät, überhitzt oder eine Person gefährlich nahe an dem Gerät ist, so kann dieses Überwachungsgerät beispielsweise eine entsprechende Steuertransaktion mit Steuerbefehlen und Ausführungsanforderungen (z. B. umfassen die Ausführungsanforderungen die Priorität) zum Abschalten des Gerätes in dem verteilten Datenbanksystems einstellen oder speichern. Das verteilte Datenbanksystem bzw. dessen Infrastruktur wertet diese Steuertransaktion aus und übermittelt vorzugsweise an das abzuschaltende Gerät die Steuertransaktion.

Es können also einer Steuertransaktion oder entsprechenden Steuerbefehlen mittels der Ausführungsanforderungen auch eine Priorität zugeordnet werden. Diese Priorität ist vorzugsweise höher als eine Priorität der übrigen Steuerbefehle. Mit dieser erhöhten Priorität wird die entsprechende Steueranweisung einer Steuertransaktion bevorzugt von dem entsprechenden Gerät abgearbeitet, um beispielsweise die restlichen Steuerbefehle der Befehlsfolge zu invalidieren (für ungültig erklären) bzw. deren Ausführung zu unterbinden.

Anhand der Ausführungsanforderungen, z. B. unter Berücksichtigung der Priorität, kann beispielsweise ein Scheduling für die Steuertransaktionen erfolgen. Alternativ oder zusätzlich kann für das Scheduling der Steuertransaktion/en eine Optimierungsgröße und/oder eine Kostenfunktion berücksichtigt werden, um z. B. durch das Scheduling eine dezentrale Ausführungspriorisierung der Steuertransaktionen durch entsprechende Geräte zu realisieren. Anhand der Bestätigungsnachrichten der Geräte für unterschiedliche Steuerbefehle werden die entsprechenden Steuerbefehle werden unter Berücksichtigung der Optimierungsgröße und/oder eine Kostenfunktion die entsprechenden Steuerbefehle z. B. für das Speichern in Steuertransaktionen zunächst sortiert und selektiert. Beispielsweise wird durch das Sortieren eine Reihenfolge der Steuerbefehle in einer entsprechenden Steuertransaktion vorgegeben, um die Abarbeitung durch ein entsprechendes Gerät zu beschleunigen.

Entsprechend können beispielsweise in eine Steuertransaktion Steuerbefehle gespeichert werden, die von einem einzelnen Gerät oder von einer Gruppe von Geräten ausgeführt werden können. Durch die Reihenfolge oder Sortierung der Steuerbefehle in einer entsprechenden Steuertransaktion wird beispielsweise die Abarbeitungsreihenfolge der Steuerbefehle durch die Geräte oder die Gruppe von Geräten gesteuert.

Alternativ oder zusätzlich kann die Priorität oder die Ausführungsanforderungen der entsprechenden Steuerbefehle einen Wert umfassen, der die Dringlichkeit einer Ausführung von entsprechenden Steuerbefehlen angibt. Hier kann beispielsweise ein Gerät oder eine Gruppe von Geräten (auch Gerätegruppe genannt) in entsprechenden Bestätigungsnachrichten bestätigen, dass dieser Dringlichkeitswert bei der Priorität verarbeitet werden kann.

Damit kann z. B. von den Geräten bestätigt werden, dass diese ggf. eine Priorisierung, Umpriorisierung, etc. bei der Abarbeitung bzw. Ausführung der Steuerbefehle selbständig durch die Geräte vorgenommen wird und z. B. über eine vorgegebene Kommunikationsplattform erfolgt (z. B. ebenfalls in den Ausführungsanforderungen vorgegeben). Die Kommunikationsplattform kann z. B. die Netzwerkapplikation oder ein separates verteiltes Datenbanksystem oder eine Blockkette sein.

Alternativ oder zusätzlich kann das Bestimmungsmodul und/oder das Bereitstellungsmodul den Dringlichkeitswert beim Speichern der Steuerbefehle in Steuertransaktionen berücksichtigen. Dabei wird anhand der Bestätigungsnachrichten und/oder unter Berücksichtigung des Dringlichkeitswertes festgelegt, durch welches Gerät und/oder zu welchem Zeitpunkt die Steuerbefehle von entsprechenden Steuertransaktionen ausgeführt werden. Die Steuerbefehle, die in einer Steuertransaktion gespeichert werden, werden derart ausgewählt, dass sie die Daten der Bestätigungsnachrichten und/oder Dringlichkeitswert berücksichtigen. Mit anderen Worten wird der Inhalt (also welche Steuerbefehle in der Steuertransaktion gespeichert werden) einer Steuertransaktion z. B. anhand der Bestätigungsnachrichten und/oder des Dringlichkeitswertes und/oder der Priorität bestimmt.

Beispielsweise kann eine Reihenfolge von Steuertransaktionen in einem Datenblock anhand der Bestätigungsnachrichten und/oder des Dringlichkeitswertes und/oder der Priorität und/oder der Ausführungsanforderungen der entsprechenden Steuertransaktionen bestimmt werden. Auch das kann beispielsweise durch das Bestimmungsmodul oder durch das Bereitstellungsmodul festgelegt werden.

Dadurch können sich z. B. unterschiedliche Arten von Steuertransaktionen realisieren. Das sind beispielsweise Steuertransaktionen, die z. B. in einem vorgegeben Zeitfenster abgearbeitet werden (z. B. im nächsten Block oder Validierungszyklus). Und es können beispielsweise Steuertransaktionen sein, deren Ausführbarkeit bestätigt ist (z. B. validated Transactions for scheduling), aber deren Ausführungszeitpunkt noch unbestimmt ist und/oder der Ausführungszeitpunkt unwichtig ist. Es ist nur wichtig, dass diese ggf. ausgeführt werden können.
Beispielsweise kann das Bestimmungsmodul einen Gerätespeicher umfassen, indem die Geräteeigenschaften für jedes der einzelnen Geräte der Vielzahl der Geräte gespeichert sind. Die Geräteeigenschaften umfassen dabei z. B. die Kommunikationsadresse des Gerätes, den Standort des Gerätes, Werkzeuge des Gerätes, Sicherheitseinrichtungen des Gerätes, kryptographische Einrichtungen des Gerätes usw.

Das Bestimmungsmodul kann z. B. anhand der Geräteeigenschaften und/oder der Ausführungsanforderungen und/oder der Transaktion und/oder der Steuerbefehle das Gerät oder die Geräte bestimmt, an welche die Anfragenachricht übermittelt wird.

Das zweite Empfangsmodul ist zum Empfangen von Bestätigungsnachrichten eingerichtet, wobei die Bestätigungsnachrichten Antworten des Gerätes oder der mehreren Geräte auf die Anfragenachricht sind.

In einer Variante der Vorrichtung umfasst eine entsprechende Bestätigungsnachricht aktuelle Geräteeigenschaften des Gerätes, das beispielsweise die entsprechende Bestätigungsnachricht gesendet hat. Dies ist vorteilhaft, um beispielsweise eine geänderte Konfiguration oder Geräteeigenschaften des Gerätes der Vorrichtung mitzuteilen. Das Bestimmungsmodul kann dabei beispielsweise die gespeicherten Geräteeigenschaften im Gerätespeicher aktualisieren.

Das Bereitstellungsmodul ist dazu eingerichtet, die Transaktion und/oder die Steuerbefehle anhand der Bestätigungsnachrichten als Steuertransaktion oder als mehrere Steuertransaktionen bereitzustellen. Beispielsweise werden hierbei durch das Bereitstellungsmodul die Steuertransaktion oder die mehreren Steuertransaktionen als validierte Steuertransaktionen in der Netzwerkapplikation gespeichert. Beispielsweise werden in Falle eine Blockkette diese Transaktionen als validierte Transaktionen z. B. in einem Datenblock der Blockkette gespeichert.

In einer Variante der Vorrichtung umfasst die Vorrichtung ein Bestätigungsmodul. Das Bestätigungsmodul kann z. B. dazu eingerichtet sein die Ausführung der Steuerbefehle und/oder Steuertransaktionen zu bestätigen. Dies kann z. B. anhand der Ausführungsbestätigungsnachricht und/oder anhand der Ausführungsanforderungen erfolgen. Beispielsweise kann durch die Ausführungsanforderungen ein Abarbeitungszeitpunkt für zumindest einen Teil der Steuerbefehle vorgeben sein. Ist z. B. in der Netzwerkapplikation (z. B. der Blockkette BC) eine Ausführungsbestätigungsnachricht in Form von einer Ausführungsbestätigungstransaktion für diese Steuerbefehle zum vorgegebenen Zeitpunkt vorhanden, so wird die Ausführung dieser Steuerbefehle z. B. durch die Vorrichtung bestätigt und ein entsprechendes Gerät kann z. B. für die Ausführung der Steuerbefehle mittels Ressourcen (z. B. Rohstoffe, Geld, Kryptoassets, Freigabe von Speicherplatz, Freigabe eines Maschinenplatzes) entlohnt werden. Es ist beispielsweise auch möglich, dass die entsprechenden Ausführungsbestätigungsnachrichten von einem Kontrollgerät (z. B. dem dritten Knoten N3) für eine Ausführung der Steuerbefehle durch ein Gerät (z. B. der erste Knoten N1) erzeugt werden. Mit anderen Worten sind das Gerät, das die Ausführungsbestätigungsnachricht schickt und das Gerät, das die Steuerbefehle abarbeitet bzw. ausführt, voneinander verschieden.

In einer Variante ist das Bestimmungsmodul oder das Bestätigungsmodul dazu eingerichtet, bei einer Nichteinhaltung der Ausführungsanforderungen und/oder bei einer erfolglosen Ausführung einer entsprechenden Steuertransaktion oder entsprechen der Steuerbefehle durch ein entsprechendes Gerät, die entsprechende Steuertransaktion oder die entsprechenden Steuerbefehle an ein weiteres Gerät zur Ausführung zu übermitteln, wobei das weitere Gerät z. B. für die entsprechenden Steuerbefehle oder für die entsprechende Steuertransaktion eine Bestätigungsnachricht geschickt hat. Dies ist z. B. der Fall, wenn zum Abarbeitungszeitpunkt, der z. B. für entsprechende Steuerbefehle durch die zugeordneten Ausführungsanforderungen vorgegeben ist, keine Ausführungsbestätigungsnachrichten vorliegen. Der Abarbeitungszeitpunkt in den Ausführungsanforderungen für die entsprechenden Steuerbefehle kann beispielsweise so gewählt werden, dass noch genügend Zeit zur Verfügung steht, dass das weitere Gerät die Steuerbefehle abarbeiten kann. Beispielsweise kann das Bestimmungsmodul die Ausführungsanforderungen derart bestimmen, dass notfalls noch genug Zeit ist, dass mindestens ein zweites Gerät die entsprechenden Steuerbefehle bzw. Steuertransaktionen ausführen kann. Insbesondere werden beim Ausführen von Steuertransaktionen, die Steuerbefehle, die in der Steuertransaktion gespeichert sind, ausgeführt. Wenn also Steuerbefehle ausgeführt werden, wird damit implizit auch die Steuertransaktion ausgeführt.

Die Vorrichtung V kann beispielsweise zusätzlich noch eine Aktualisierungsschnittstelle umfassen. Mittels dieser Schnittstelle (z. B. eine USB-Schnittstelle oder eine Firewire-Schnittstelle oder einer andere Kommunikationsschnittstelle) kann beispielsweise eine Firmware der Vorrichtung aktualisiert werden und/oder Konfigurationsdaten eingespielt werden und/oder Protokolldaten/Loggingdaten der Vorrichtung V ausgelesen werden. Mittels dieser Schnittstelle oder einer weiteren Schnittstelle kann beispielsweise die Vorrichtung V beispielsweise auch zu Wartungszwecken ferngesteuert werden (z. B. Fernwartung). Dies kann beispielsweise relevant sein, wenn die Vorrichtung V neu gestartet werden muss.
Die Vorrichtung V kann beispielsweise noch einen Zeitgeber (z. B. eine Uhr) umfassen. Dieser Zeitgeber kann z. B. verwendet werden, um festzustellen, ob die Bestätigungsnachrichten rechtzeitig eingegangen sind.

Die Vorrichtung V kann beispielsweise zusätzlich noch einen Lüfter, z. B. zur Kühlung der Module oder der Komponenten der Vorrichtung, umfassen.

Die Vorrichtung V kann beispielsweise zusätzlich noch eine weitere Komponente oder mehrere weitere Komponenten umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Das in Fig. 1 gezeigte externe Gerät G ist z. B. nicht als Knoten de Netzwerkapplikation ausgebildet, kann jedoch z. B. über eine entsprechende Datenschnittstelle des Gerätes G von der Netzwerkapplikation mittels der Steuerbefehle bzw. einer Steuertransaktion gesteuert werden. Alternativ ruft das Gerät G über die Datenschnittstelle Steuerbefehle bzw. eine Steuertransaktion z. B. von der Netzwerkapplikation ab.

Desweiteren zeigt die Fig. 1 Blöcke B, beispielsweise einen ersten Block B1, einen zweiten Block B2 und einen dritten Block B3, der Blockkette BC, wobei hier insbesondere ein Ausschnitt der Blockkette BC exemplarisch gezeigt ist.

Die Blöcke B umfassen jeweils mehrere Transaktionen T. Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten VorgängerBlock gebildet wird. Somit umfasst der erste Block B1 eine erste Verkettungsprüfsumme CRC1 von seinem Vorgängerblock, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen Hash-Funktion wie z. B. SHA-256, KECCAK-256 oder SHA-3 gebildet werden. Beispielsweise kann die Verkettungsprüfsumme zusätzlich über die Datenblockprüfsumme berechnet werden oder der Header umfasst die Datenblockprüfsumme (die Datenblockprüfsumme ist im Nachgang erläutert).

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash-Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen, so wie es in den Ausführungsformen der Erfindung erläutert wurde.

Die Blockkette BC selbst wird durch eine Blockketten-Infrastruktur mit mehreren Blockketten-Knoten (Knoten N1, N2, N3, N4 und weiteren Blöcken) realisiert. Bei den Knoten kann es sich beispielsweise um Blockkettenorakel oder vertrauenswürdige Knoten handeln.

Die Knoten und das externe Gerät sind über das Netzwerk NW1 (z. B. ein Kommunikationsnetzwerk wie das Internet oder ein Ethernet-Netzwerk) miteinander kommunikativ verbunden. Mittels der Blockketten-Infrastruktur werden beispielsweise zumindest ein Teil der Datenblöcke B oder alle Datenblöcke B der Blockkette BC für einen Teil oder alle Knoten der Blocckette repliziert.

Die Vorrichtung V kann z. B. durch Komponenten oder Bauteile der Blockkette (oder der Netzwerkapplikation oder des verteilten Datenbanksystems) realisiert sein, indem die Blocckette oder die Netzwerkapplikation die Module der Vorrichtung V ganz oder teilweise realisieren. Beispielsweise können die jeweiligen Module jeweils durch ein oder mehrere Knoten realisiert sein, die spezifisch für die Funktion konfiguriert wurden. Diese Knoten können beispielsweise Prozessoren z. B. in Form von ASICS sein. Vorzugsweise sind die jeweiligen Module durch mehrere gleichartig ausgebildete Knoten realisiert, um z. B. bei einem Ausfall von einem Knoten die Funktionalität des jeweiligen Moduls zu gewährleisten.

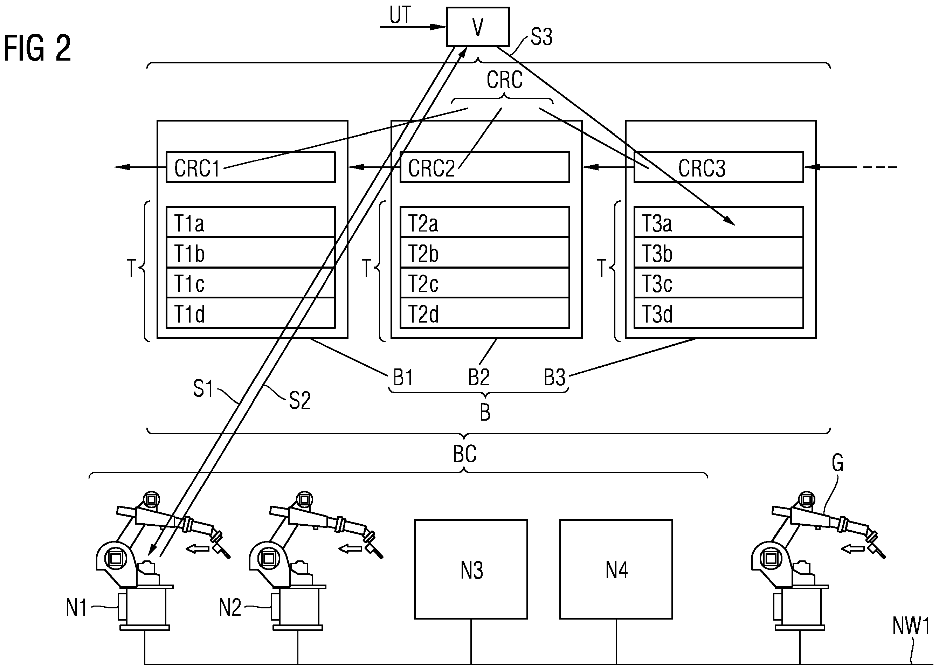

Die Fig. 2 zeigt in Zusammenhang mit Fig. 1 beispielhaft den Ablauf einer Verarbeitung einer Transaktion.

Der Vorrichtung V empfängt eine (unvalidierte) Transaktion UT, die beispielsweise Steuerbefehle umfasst. Zusätzlich umfasst die Transaktion UT z. B. Ausführungsanforderungen, die jeweils einem der Steuerbefehle oder mehreren Steuerbefehlen zugeordnet sind. Es können auch verschiedene Ausführungsanforderungen jeweils den einzelnen Steuerbefehlen der Steuerbefehle zugeordnet sein. Umfasst die Transaktion beispielsweise 10 Steuerbefehle, so können z. B. jedem dieser Steuerbefehle einzelne Ausführungsanforderungen unterschiedlicher Art zugeordnet sein. Entsprechend können beispielsweise einzelnen Steuerbefehlen oder mehreren Steuerbefehlen gemeinsame Ausführungsanforderungen oder jeweils verschiedene Ausführungsanforderungen zugeordnet sein. Diese Zuordnung kann beispielsweise ganz oder teilweise von dem Bestimmungsmodul durchgeführt werden.

Das Bestimmungsmodul ist dazu eingerichtet, ein Gerät oder mehrere Geräte zu bestimmen, die jeweils die Steuerbefehle ganz oder teilweise ausführen. Beispielsweise bestimmt das Bestimmungsmodul anhand der Steuerbefehle und der Ausführungsanforderungen anhand der Geräteeigenschaften des Knotens N1, dass dieser die Steuerbefehle ausführen kann. Das Bestimmungsmodul kann in einer Variante auch zunächst die entsprechenden Ausführungsanforderungen bestimmen und danach die entsprechenden Geräte. Das Bestimmungsmodul übermittelt (z. B. mittels eines separaten und/oder direkten Kommunikationskanals) nun in S1 dem ersten Knoten N1 eine Anfragenachricht zur Ausführung der entsprechenden Steuerbefehle. Die Anfragenachricht kann beispielsweise auch als eine Transaktion (z. B. die Transaktion T1a) der Netzwerkapplikation (z. B. ist die Netzwerkapplikation mittels der Blockkette BC implementiert) an den ersten Knoten übermittelt werden. Hierzu wird die entsprechende Anfragenachricht in einer Transaktion (z. B. Anfragetransaktion genannt) der Blockkette gespeichert und z. B. mittels der Blockketteninfrastruktur in einem Datenblock dem ersten Knoten N1 bereitgestellt oder an den Knoten N1 übermittelt.

Die Anfragenachricht umfasst dabei eine Anfrage mit entsprechenden Informationen (z. B. die Ausführungsanforderungen und/oder die Steuerbefehle und/oder Angaben über die notwendigen Ressourcen, die für eine Ausführung der Steuerbefehle notwendig sind) damit der Knoten N1 eine Bestätigungsnachricht erstellen kann, mit der der Knoten N1 bestätigt, die Steuerbefehle auszuführen und dabei z. B. die Ausführungsanforderungen der Steuerbefehle auch einhält (S2).

Die notwendigen Ressourcen können dabei z. B. von dem Bestimmungsmodul für die entsprechenden Steuerbefehle ermittelt werden.

Die Bestätigungsnachricht kann beispielsweise auch in als eine Transaktion (z. B. die Transaktion T2a) der Netzwerkapplikation (z. B. ist die Netzwerkapplikation mittels der Blocckette BC implementiert) an die Vorrichtung V übermittelt werden. Hierzu wird die entsprechende Bestätigungsnachricht in einer Transaktion (z. B. Bestätigungstransaktion genannt) der Blockkette gespeichert und z. B. mittels der Blockketteninfrastruktur in einem Datenblock der Vorrichtung V bereitgestellt oder an die Vorrichtung V übermittelt.

Bestätigt der erste Knoten N1 mit seiner Bestätigungsnachricht, dass er die Steuerbefehle ausführen kann, werden die entsprechenden Steuerbefehle z. B. in der Transaktion T3a gespeichert, die auch als validierte Steuertransaktion bezeichnet werden kann (S3).

Das erste Gerät oder der erste Knoten N1 können unterschiedlich ausgestaltet sein.

Beispielsweise kann das Gerät ein erstes Empfangsmodul, ein Überprüfungsmodul, ein optionales Sendemodul, ein optionales zweites Empfangsmodul und ein Ausführungsmodul umfassen, die über einen Bus kommunikativ miteinander verbunden sind.

Das erste Empfangsmodul ist dazu eingerichtet eine Anfragenachricht zur Ausführung von Steuerbefehlen zu empfangen. Die Anfragenachricht kann die Steuerbefehle selbst und/oder die Ausführungsanforderungen für eine Ausführung der Steuerbefehle durch das Gerät umfassen.

Das Überprüfungsmodul ist dazu eingerichtet ein Prüfergebnis über die Ausführbarkeit der Steuerbefehle durch das Gerät zu ermitteln. Hierzu kann das Überprüfungsmodul die Geräteeigenschaften dahingehend überprüfen, ob diese die Ausführungsanforderungen einhalten und/oder ob das Gerät aktuell in der Lage ist die Steuerbefehle auszuführen. Beispielsweise kann aufgrund einer hohen Geräteauslastung wegen der Abarbeitung anderer Steuerbefehle, das Gerät nicht in der Lage sein, die Steuerbefehle entsprechend der Ausführungsanforderungen auszuführen.

Ist beispielsweise durch die Ausführungsanforderungen eine Zeitanforderungen für die Abarbeitung bzw. Ausführung der Steuerbefehle oder der Steuertransaktion durch das Gerät vorgegeben, so können die Ausführungsanforderungen oder die Bestätigungsnachricht, z. B. eine Angabe darüber umfassen wie schnell (z. B. eine Zeitdauer) oder wann (z. B. ein Zeitpunkt) das Gerät ggf. die Steuerbefehle oder die Steuertransaktion ausgeführt haben wird bzw. wann das Gerät diese ausgeführt haben soll. Um die Zeitdauer oder den Zeitpunkt zu ermitteln, können noch weitere Parameter berücksichtigt werden. Beispielsweise kann die Ausführungsdauer, die z. B. allgemein durch die Ausführungsanforderungen vorgegeben ist, für ein jeweiliges Gerät durch das Bestimmungsmodul z. B. derart berechnet werden, dass ggf. eine Pufferzeit vorhanden ist, damit die entsprechenden Steuerbefehle bzw. Steuertransaktion noch rechtzeigt von einem zweiten Gerät ausgeführt werden können. Beispielsweise ist zunächst vorgegeben eine Transaktion bzw. deren Steuerbefehle innerhalb von 8 h auszuführen. Vier der Knoten haben sich bereit erklärt die Transaktion auszuführen. Wenn der erste Knoten nach 2 h keine Bestätigung für die Ausführung übermittelt (z. B. als Ausführungsbestätigungstransaktion), werden durch das Bestimmungsmodul bzw. Bereitstellungsmodul dem zweiten Knoten die entsprechenden Steuerbefehle übermittelt.

Entsprechend kann das Bestimmungsmodul anhand der Bestätigungsnachrichten die Ausführungsanforderungen für die entsprechenden Geräte noch einmal anpassen und zusammen mit den Steuerbefehlen bzw. der Steuertransaktion einem entsprechenden Gerät bereitstellen.

Für die Berechnung der Zeitdauer bzw. des Zeitpunktes können noch weitere Faktoren berücksichtigt werden:
- Eine Übermittlungsverzögerung, die z. B. durch den Datenreplikationsmechanismus des verteilten Datenbanksystems hervorgerufen wird, und/oder
- eine Verarbeitungszeit der Knoten für die Steuerbefehle oder Steuertransaktionen, die z. B. anhand der Bestätigungsnachricht und der darin von dem entsprechenden Gerät gespeicherten Angaben über die Abarbeitung oder Ausführung der Steuerbefehle bzw. Steuertransaktionen gespeichert ist.

Das Sendemodul ist dazu eingerichtet eine Bestätigungsnachricht für die Ausführbarkeit der Steuerbefehle durch das Gerät anhand des Prüfergebnisses zu senden. Das Gerät sendet diese Bestätigungsnachricht an die Vorrichtung V. Die Bestätigungsnachricht umfasst beispielsweise eine Bestätigung darüber, dass das Gerät die Steuerbefehle ausführen kann oder aber eine Ablehnung, dass das Gerät derzeit oder generell nicht in der Lage ist die Steuerbefehle unter Einhaltung der Ausführungsanforderungen auszuführen. Die Bestätigungsnachricht kann zudem noch aktuelle Geräteeigenschaften des Gerätes umfassen.

Das Gerät umfasst beispielsweise das zweite Empfangsmodul, wenn die Anfragenachricht z. B. die Steuerbefehle nicht umfasst. Die Anfragenachricht kann in einem solchen Fall z. B. die Ausführungsanforderungen umfassen und/oder eine Referenz bzw. einen Verweis auf einen Speicherort der Steuerbefehle. Das zweite Empfangsmodul ist dann z. B. dazu eingerichtet die Steuerbefehle und/oder eine Steuertransaktion mit den Steuerbefehlen zu empfangen.

Sind z. B. die Ausführungsanforderungen für die Steuerbefehle noch einmal angepasst worden, so kann das Gerät bzw. das Überprüfungsmodul noch einmal die Ausführbarkeit der Steuerbefehle anhand der Ausführungsanforderungen überprüfen. Kann die Ausführbarkeit der Steuerbefehle oder der Steuertransaktion nicht bestätigt werden, so wird eine entsprechende Nachricht an die Vorrichtung V z. B. als Transaktion der Blocckette BC übertragen. Kann die Ausführbarkeit bestätigt werden, werden die entsprechenden Steuerbefehle bzw. die Steuertransaktion an das Ausführungsmodul übertragen.

Das Ausführungsmodul ist z. B. dazu eingerichtet die Steuerbefehle und/oder die Steuertransaktion auszuführen, wobei das Ausführungsmodul dazu eingerichtet ist eine Ausführungsbestätigungsnachricht über die Ausführung der Steuerbefehle bereitzustellen. Die Ausführungsbestätigungsnachricht kann z. B. als eine Transaktion in der Netzwerkapplikation (z. B. der Blockkette BC) gespeichert werden.

In einer Variante ist das Ausführungsmodul dazu eingerichtet, die Steuerbefehle und/oder die Steuertransaktion zu überprüfen, ob es sich um die entsprechenden Steuerbefehle der Anfragenachricht handelt. Hierfür kann die Anfragenachricht z. B. eine Prüfsumme über die Steuerbefehle bzw. die Steuertransaktion umfassen oder eine entsprechende Prüfsumme wird an das Gerät separat übermittelt. Anhand dieser Prüfsumme wird ermittelt, ob es sich bei den empfangenen Steuerbefehlen tatsächlich um die Steuerbefehle der Anfragenachricht handelt.

Alternativ oder zusätzlich sind die empfangenen Steuerbefehle und/oder die Steuertransaktion mit einer Prüfsumme in Form einer digitalen Signatur der Vorrichtung V kryptographisch geschützt. Digitale Signatur wird von dem Gerät vor der Ausführung der Steuerbefehle bzw. der Steuertransaktion überprüft und es erfolgt z. B. eine Ausführung, wenn die digitale Signatur erfolgreich überprüft werden konnte. Ist die Überprüfung nicht erfolgreich, so wird beispielsweise die Ausführung unterbunden. In der entsprechenden Ausführungsbestätigungsnachricht wird dann gespeichert, ob die Steuerbefehle oder die Steuertransaktion ausgeführt wurden und z. B. das Ergebnis der Prüfung der digitalen Signatur gespeichert wurde.

Das Gerät kann beispielsweise zusätzlich noch eine Aktualisierungsschnittstelle umfassen. Mittels dieser Schnittstelle (z. B. eine USB-Schnittstelle oder eine Firewire-Schnittstelle oder einer andere Kommunikationsschnittstelle) kann beispielsweise eine Firmware des Gerätes aktualisiert werden und/oder Konfigurationsdaten eingespielt werden und/oder Protokolldaten/Loggingdaten des Gerätes ausgelesen werden. Mittels dieser Schnittstelle oder einer weiteren Schnittstelle kann beispielsweise das Gerät auch zu Wartungszwecken ferngesteuert werden (z. B. Fernwartung). Dies kann beispielsweise relevant sein, wenn das Gerät neu gestartet werden muss.
Das Gerät kann beispielsweise noch einen Zeitgeber (z. B. eine Uhr) umfassen. Dieser Zeitgeber kann z. B. verwendet werden, um festzustellen, ob die Bestätigungsnachrichten rechtzeitig eingegangen sind.

Das Gerät kann beispielsweise zusätzlich noch einen Lüfter, z. B. zur Kühlung der Module oder der Komponenten des Gerätes, umfassen.

Das Gerät kann beispielsweise zusätzlich noch eine weitere Komponente oder mehrere weitere Komponenten umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Es ist beispielsweise auch möglich, dass bestimmten Klassen oder Typen von Transaktionen mittels der Erfindung validiert werden. Diese Transaktionen umfassen beispielsweise einen bestimmten Typen von Steuerbefehlen, denen jeweils entsprechende Ausführungsanforderungen zugewiesen sind. Beispielsweise können diese Typen von Steuerbefehlen bestimmte gleichartige Fertigungsschritte sein (z. B. 3D Druck eines Bauteils, Fräsen einer bestimmten Geometrie in ein Werkstück). Diese Typen von Transaktionen umfassen beispielsweise besonders kritische Steuerbefehle, die z. B. nur unter einer strikten Einhaltung von Ausführungsanforderungen durch ein Gerät ausgeführt werden dürfen.

Die Geräte bestätigen in ihren Bestätigungsnachrichten, dass sie z. B. diesen Typ von Transaktion garantiert innerhalb eines Zeitfensters ausführen.

Mit der Erfindung bietet sich die Möglichkeit eine Blockkette für industrielle Anwendung vor allem im Fertigungsbereich einzusetzen. Hierbei können durch die Konfigurierbarkeit und die Auswählbarkeit der Validierung und/oder Übertragung beispielsweise zeitliche Anforderungen vorgegeben werden. Das verteilte Datenbanksystem validiert z. B. nur diejenigen Transaktionen, die von einem entsprechenden blockkettenbasierten Fertigungssystem ausgeführt werden können, indem z. B. eine vorgegebene Anzahl von Knoten bestätigen, dass sie diese die Transaktionen ausführen.

Die Erfindung eignet sich für insbesondere für Systemen von Cyberphysikalischen Systemen und/oder IoT Anwendungen der Blockchain, bei der zumindest ein Gerät irgendeine Steueraktion mittels Steuerbefehlen ausführen soll, wobei die Ausführung gewissen Anforderungen unterworfen ist.

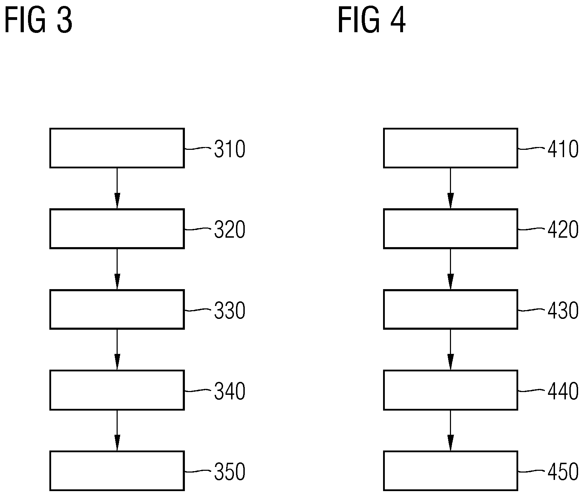

Die Fig. 3 zeigt ein weiteres Ausführungsbeispiel der Erfindung, das als Ablaufdiagramm für ein Verfahren dargestellt ist.

Das Verfahren ist vorzugsweise rechnergestützt realisiert.

Im Einzelnen wird in diesem Ausführungsbeispiel ein Verfahren zum rechnergestützten oder computerimplementierten Bereitstellen einer Steuertransaktion gezeigt. Bei dem Verfahren handelt es sich insbesondere um ein Verfahren zum Bereitstellen einer validierten Steuertransaktion durch eine Blockkette.

Das Verfahren umfasst einen ersten Verfahrensschritt 310 zum Empfangen einer Transaktion, wobei die Transaktion Steuerbefehle umfasst.

Das Verfahren umfasst einen zweiten Verfahrensschritt 320 zum Bestimmen eines Gerätes oder von mehreren Geräten, die jeweils die Steuerbefehle ganz oder teilweise ausführen.

Das Verfahren umfasst einen dritten Verfahrensschritt 330 zum Übermitteln einer Anfragenachricht zur Ausführung der entsprechenden Steuerbefehle an das Gerät oder die mehreren Geräte.

Das Verfahren umfasst einen vierten Verfahrensschritt 340 zum Empfangen von Bestätigungsnachrichten, wobei die Bestätigungsnachrichten Antworten des Gerätes oder der mehreren Geräte auf die Anfragenachricht sind.

Das Verfahren umfasst einen fünften Verfahrensschritt 350 zum Bereitstellen der Transaktion und/oder der Steuerbefehle als Steuertransaktion oder als mehrere Steuertransaktionen anhand der Bestätigungsnachrichten.

Die Fig. 4 zeigt ein weiteres Ausführungsbeispiel der Erfindung, das als Ablaufdiagramm für ein Verfahren dargestellt ist.

Das Verfahren ist vorzugsweise rechnergestützt realisiert.

Im Einzelnen wird in diesem Ausführungsbeispiel ein Verfahren zum rechnergestützten oder computerimplementierten Ausführen einer Steuertransaktion durch ein Gerät gezeigt. Bei dem Verfahren handelt es sich insbesondere um ein Verfahren zum Ausführen einer validierten Steuertransaktion durch einen Knoten einer Netzwerk-Applikation (z. B. einer Blockkette).

Das Verfahren umfasst einen ersten Verfahrensschritt 410 zum Empfangen einer Anfragenachricht zur Ausführung von Steuerbefehlen durch ein Gerät.

Das Verfahren umfasst einen zweiten Verfahrensschritt 420 zum Ermitteln eines Prüfergebnisses über eine Ausführbarkeit der Steuerbefehle durch das Gerät.

Das Verfahren umfasst einen dritten Verfahrensschritt 430 zum Senden einer Bestätigungsnachricht für die Ausführbarkeit der Steuerbefehle durch das Gerät anhand des Prüfergebnisses.

Das Verfahren umfasst einen vierten Verfahrensschritt 440 zum Empfangen der Steuerbefehle und/oder einer Steuertransaktion mit den Steuerbefehlen.

Das Verfahren umfasst einen fünften Verfahrensschritt 450 zum Ausführen der Steuerbefehle und/oder der Steuertransaktion. In einem weiteren, nicht in einer Figur gezeigten, Ausführungsbeispiel umfasst die Vorrichtung:
- beispielsweise ein erstes Empfangsmodul, wobei
   ∘ beispielsweise das erste Empfangsmodul zum Empfangen von einer Transaktion eingerichtet ist,
   o beispielsweise die Transaktion Steuerbefehle umfasst,
   ∘ beispielsweise die Steuerbefehle von einem oder mehreren Geräten einer Netzwerkapplikation ausgeführt werden sollen;
- beispielsweise ein Bestimmungsmodul, wobei
   ∘ beispielsweise das Bestimmungsmodul dazu eingerichtet ist, ein Gerät oder mehrere Geräte zu bestimmen, die jeweils die Steuerbefehle ganz oder teilweise ausführen,
   ∘ beispielsweise das Bestimmungsmodul dazu eingerichtet ist, an das Gerät oder die mehreren Geräte eine Anfragenachricht zur Ausführung der entsprechenden Steuerbefehle zu übermitteln,
- beispielsweise ein zweites Empfangsmodul, wobei
   ∘ beispielsweise das zweite Empfangsmodul zum Empfangen von Bestätigungsnachrichten eingerichtet ist,
   ∘ beispielsweise die Bestätigungsnachrichten Antworten des Gerätes oder der mehreren Geräte auf die Anfragenachricht sind;
- beispielsweise ein Bereitstellungsmodul, wobei
   ∘ beispielsweise das Bereitstellungsmodul dazu eingerichtet ist, die Transaktion und/oder die Steuerbefehle anhand der Bestätigungsnachrichten als Steuertransaktion oder als mehrere Steuertransaktionen bereitzustellen.

In einem weiteren, nicht in einer Figur gezeigten, Ausführungsbeispiel umfasst die Vorrichtung:
- beispielsweise ein erstes Empfangsmodul, wobei
   ∘ beispielsweise das erste Empfangsmodul zum Empfangen von einer Transaktion eingerichtet ist,
   ∘ beispielsweise die Transaktion Steuerbefehle umfasst,
   ∘ beispielsweise die Steuerbefehle von einem oder mehreren Geräten einer Netzwerkapplikation ausgeführt werden sollen;
- beispielsweise ein Bestimmungsmodul, wobei
   ∘ beispielsweise das Bestimmungsmodul dazu eingerichtet ist, ein Gerät oder mehrere Geräte zu bestimmen, die jeweils die Steuerbefehle ganz oder teilweise ausführen,
   ∘ beispielsweise das Bestimmungsmodul dazu eingerichtet ist, an das Gerät oder die mehreren Geräte eine Anfragenachricht zur Ausführung der entsprechenden Steuerbefehle zu übermitteln,
- beispielsweise ein zweites Empfangsmodul, wobei
   ∘ beispielsweise das zweite Empfangsmodul zum Empfangen von Bestätigungsnachrichten eingerichtet ist,
   ∘ beispielsweise die Bestätigungsnachrichten Antworten des Gerätes oder der mehreren Geräte auf die Anfragenachricht sind;
- beispielsweise ein Bereitstellungsmodul, wobei
   ∘ beispielsweise das Bereitstellungsmodul dazu eingerichtet ist, die Transaktion und/oder die Steuerbefehle anhand der Bestätigungsnachrichten zu markieren und als markierte Steuertransaktion oder als mehrere markierte Steuertransaktionen bereitzustellen.

Hierdurch können beispielsweise die Steuertransaktion/en bzw. die Steuerbefehle einer Steuertransaktion, für die die Ausführbarkeit bestätigt wurde, durch das Bereitstellungsmodul markiert werden. Hierdurch können Transaktionen (z. B. Steuerbefehle von Steuertransaktionen bzw. die entsprechenden Steuertransaktionen), deren Ausführung durch die Geräte möglicherweise nicht möglich ist, von Transaktionen (z. B. Steuerbefehle von Steuertransaktionen bzw. die entsprechenden Steuertransaktionen) unterschieden werden, die von den Geräten z. B. garantiert ausgeführt werden können.

In einem weiteren, nicht in einer Figur gezeigten, Ausführungsbeispiel umfasst die Vorrichtung:
- beispielsweise ein erstes Empfangsmodul, wobei
   ∘ beispielsweise das erste Empfangsmodul zum Empfangen von einer Transaktion eingerichtet ist,
   ∘ beispielsweise die Transaktion Steuerbefehle umfasst,
   ∘ beispielsweise die Steuerbefehle von einem oder mehreren Geräten einer Netzwerkapplikation ausgeführt werden sollen;
- beispielsweise ein Bestimmungsmodul, wobei
   ∘ beispielsweise das Bestimmungsmodul dazu eingerichtet ist, ein Gerät oder mehrere Geräte zu bestimmen, die jeweils die Steuerbefehle ganz oder teilweise ausführen,
   ∘ beispielsweise das Bestimmungsmodul dazu eingerichtet ist, an das Gerät oder die mehreren Geräte eine Anfragenachricht zur Ausführung der entsprechenden Steuerbefehle zu übermitteln,
- beispielsweise ein zweites Empfangsmodul, wobei
   ∘ beispielsweise das zweite Empfangsmodul zum Empfangen von Bestätigungsnachrichten eingerichtet ist,
   ∘ beispielsweise die Bestätigungsnachrichten Antworten des Gerätes oder der mehreren Geräte auf die Anfragenachricht sind;
- beispielsweise ein Bereitstellungsmodul, wobei
   ∘ beispielsweise das Bereitstellungsmodul dazu eingerichtet ist, die Transaktion und/oder die Steuerbefehle anhand der Bestätigungsnachrichten zu selektieren und als selektierte Steuertransaktion oder als mehrere selektierte Steuertransaktionen bereitzustellen.

Hierdurch können beispielsweise die Steuertransaktion/en bzw. die Steuerbefehle von entsprechenden Steuertransaktionen, für die die Ausführbarkeit bestätigt wurde, durch das Bereitstellungsmodul selektiert werden. Hierdurch können z. B. Transaktionen (z. B. Steuerbefehle von Steuertransaktionen bzw. die entsprechenden Steuertransaktionen), deren Ausführung durch die Geräte bestätigt wurde, ausschließlich von dem Bereitstellungsmodul bereitgestellt werden. Transaktionen, für die keine Bestätigung über deren Ausführbarkeit in den Bestätigungsnachrichten vorliegen, werden dann beispielsweise nicht als Transaktionen bereitgestellt.

In einem weiteren, nicht in einer Figur gezeigten, Ausführungsbeispiel umfasst das Gerät:
- beispielsweise ein erstes Empfangsmodul, wobei beispielsweise das erste Empfangsmodul dazu eingerichtet ist, eine Anfragenachricht zur Ausführung von Steuerbefehlen zu empfangen;
- beispielsweise ein Überprüfungsmodul dazu eingerichtet ist, ein Prüfergebnis über die Ausführbarkeit der Steuerbefehle durch das Gerät zu ermitteln;
- beispielsweise ein Sendemodul, wobei das Sendemodul beispielsweise dazu eingerichtet ist, eine Bestätigungsnachricht für die Ausführbarkeit der Steuerbefehle durch das Gerät anhand des Prüfergebnisses zu senden;
- beispielsweise ein zweites Empfangsmodul, wobei beispielsweise das zweite Empfangsmodul dazu eingerichtet ist, die Steuerbefehle und/oder eine Steuertransaktion mit den Steuerbefehlen zu empfangen;
- beispielsweise ein Ausführungsmodul, wobei
   ∘ beispielsweise das Ausführungsmodul dazu eingerichtet ist, die Steuerbefehle und/oder die Steuertransaktion auszuführen,
   ∘ beispielsweise das Ausführungsmodul dazu eingerichtet ist, eine Ausführungsbestätigungsnachricht über die Ausführung der Steuerbefehle bereitzustellen.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7]
   Leemon Baird "Overview of Swirlds Hashgraph", 31.5.2016
[8]
   Blockchain Oracles https://blockchainhub.net/blockchain-oracles/ Stand 14.03.2018
[9] Joseph Poon, Thaddeus Dryja: The Bitcoin Lightning Network: Scalable Off-Chain Instant Payments. 14. Januar 2016, abgerufen am 30. Juni 2018 (PDF; 3 MB, englisch).

## Patentansprüche

1. Vorrichtung (V) aufweisend:
- ein erstes Empfangsmodul, wobei
∘ das erste Empfangsmodul zum Empfangen von einer Transaktion eingerichtet ist,
∘ die Transaktion Steuerbefehle umfasst,
∘ die Steuerbefehle von einem oder mehreren Geräten (N1) einer Netzwerkapplikation ausgeführt werden sollen;
- ein Bestimmungsmodul, wobei
∘ das Bestimmungsmodul dazu eingerichtet ist, ein Gerät (N1) oder mehrere Geräte zu bestimmen, die jeweils die Steuerbefehle ganz oder teilweise ausführen,
∘ das Bestimmungsmodul dazu eingerichtet ist, an das Gerät (N1) oder die mehreren Geräte eine Anfragenachricht zur Ausführung der entsprechenden Steuerbefehle zu übermitteln,
- ein zweites Empfangsmodul, wobei
∘ das zweite Empfangsmodul zum Empfangen von Bestätigungsnachrichten eingerichtet ist,
∘ die Bestätigungsnachrichten Antworten des Gerätes (N1) oder der mehreren Geräte auf die Anfragenachricht sind;
- ein Bereitstellungsmodul, wobei
∘ das Bereitstellungsmodul dazu eingerichtet ist, die Transaktion und/oder die Steuerbefehle anhand der Bestätigungsnachrichten als Steuertransaktion oder als mehrere Steuertransaktionen bereitzustellen.

2. Vorrichtung (V) nach dem vorhergehenden Anspruch, wobei
- beim Bereitstellen einer Validierung die Steuertransaktion oder die Steuertransaktionen anhand der entsprechenden Bestätigungsnachrichten erfolgt.

3. Vorrichtung (V) nach einem der vorhergehenden Ansprüche, wobei
- die Anfragenachricht Ausführungsanforderungen für eine Ausführung der Steuerbefehle durch das Gerät (N1) oder die Geräte umfasst, und/oder
- die Ausführungsanforderungen durch die Steuerbefehle und/oder durch die Transaktion und/oder durch eine Policy vorgegeben werden, und/oder
- die Ausführungsanforderungen gerätespezifische Anforderungen für das Gerät (N1) oder die Geräte vorgeben, und/oder
- die Ausführungsanforderungen vorausgeführte Steuerbefehle für eine Ausführung der Steuerbefehle durch das Gerät (N1) oder die Geräte vorgeben, und/oder
- die Ausführungsanforderungen eine Zeitanforderung umfassen, die eine von einem entsprechenden Gerät (N1) garantierte Abarbeitungszeit vorgibt.

4. Vorrichtung (V) nach einem der vorhergehenden Ansprüche, wobei eine entsprechende Bestätigungsnachricht aktuelle Geräteeigenschaften des Gerätes (N1) umfasst, das beispielsweise die entsprechende Bestätigungsnachricht gesendet hat.

5. Vorrichtung (V) nach einem der vorhergehenden Ansprüche, wobei
- das Bestimmungsmodul für das Gerät (N1) oder zumindest einen Teil der Geräte Geräteeigenschaften umfasst, und/oder
- das Bestimmungsmodul anhand der Geräteeigenschaften und/oder der Ausführungsanforderungen und/oder der Transaktion und/oder der Steuerbefehle das Gerät (N1) oder die Geräte bestimmt, an welche die Anfragenachricht übermittelt wird, und/oder
- die Geräteeigenschaften eines entsprechenden Gerätes (N1) im Bestimmungsmodul bei einer Änderung der Geräteeigenschaften aktualisiert werden.

6. Vorrichtung (V) nach einem der vorhergehenden Ansprüche, wobei
- eine Anzahl von Bestätigungsnachricht für einen Steuerbefehl der Steuerbefehle und/oder zumindest einen Teil der Steuerbefehle und/oder ausgewählte Steuerbefehle der Steuerbefehle vorgegeben ist, und/oder
- insbesondere die vorgegebene Anzahl von Bestätigungsnachrichten eine Ausführung der entsprechenden Steuerbefehle auf mehreren unterschiedlichen Geräten bestätigen.

7. Vorrichtung (V) nach einem der vorhergehenden Ansprüche, wobei nach einer Ausführung von entsprechenden Steuerbefehlen durch ein entsprechendes Gerät (N1), eine Ausführungsbestätigungsnachricht gespeichert wird.

8. Vorrichtung (V) nach einem der vorhergehenden Ansprüche, wobei
- die Vorrichtung (V) ein Bestätigungsmodul umfasst, und/oder
- das Bestätigungsmodul dazu eingerichtet ist, die Ausführung der Steuerbefehle und/oder Steuertransaktionen zu bestätigen, und/oder
- das Bestätigen anhand der Ausführungsbestätigungsnachricht und/oder anhand der Ausführungsanforderungen erfolgt.

9. Vorrichtung (V) nach einem der vorhergehenden Ansprüche, wobei das Bestimmungsmodul dazu eingerichtet ist, bei einer Nichteinhaltung der Ausführungsvoraussetzung und/oder bei einer erfolglosen Ausführung einer entsprechenden Steuertransaktion oder entsprechen der Steuerbefehle durch ein entsprechendes Gerät (N1), die entsprechende Steuertransaktion oder die entsprechenden Steuerbefehle an ein weiteres Gerät zur Ausführung zu übermitteln, das für die entsprechenden Steuerbefehle oder für die entsprechende Steuertransaktion eine Bestätigungsnachricht geschickt hat.

10. Vorrichtung (V) nach einem der vorhergehenden Ansprüche, wobei
- anhand der Bestätigungsnachrichten eine Reihenfolge für die Abarbeitung der Steuertransaktionen durch das Bestimmungsmodul bestimmt wird.

11. Gerät (N1) aufweisend:
- ein erstes Empfangsmodul, wobei das erste Empfangsmodul dazu eingerichtet ist, eine Anfragenachricht zur Ausführung von Steuerbefehlen zu empfangen;
- ein Überprüfungsmodul, wobei das Überprüfungsmodul dazu eingerichtet ist, ein Prüfergebnis über die Ausführbarkeit der Steuerbefehle durch das Gerät zu ermitteln;
- ein Sendemodul, wobei das Sendemodul dazu eingerichtet ist, eine Bestätigungsnachricht für die Ausführbarkeit der Steuerbefehle durch das Gerät anhand des Prüfergebnisses zu senden;
- ein zweites Empfangsmodul, wobei das zweite Empfangsmodul dazu eingerichtet ist, die Steuerbefehle und/oder eine Steuertransaktion mit den Steuerbefehlen zu empfangen;
- ein Ausführungsmodul, wobei
∘ das Ausführungsmodul dazu eingerichtet ist, die Steuerbefehle und/oder die Steuertransaktion auszuführen,
∘ das Ausführungsmodul dazu eingerichtet ist, eine Ausführungsbestätigungsnachricht über die Ausführung der Steuerbefehle bereitzustellen.

12. System aufweisend:
- eine Vorrichtung (V) nach einem der Ansprüche 1 - 10;
- ein Gerät (N1) oder mehrere Geräte nach Anspruch 11.

13. System nach Anspruch 12, wobei
- das Gerät (N1) und/oder die Geräte und/oder die Vorrichtung jeweils ein Knoten oder mehrere Knoten einer Netzwerkapplikation sind, und/oder
- die Netzwerkapplikation ein verteiltes Datenbanksystem wie eine Blockkette ist, und/oder
- die durch das erste Empfangsmodul empfangene Transaktion eine unvalidierte Transaktion ist, und/oder
- die Anfragenachricht und/oder die Bestätigungsnachricht und/oder die Ausführungsbestätigungsnachricht jeweils eine Transaktion der Netzwerkapplikation sind und/oder Nachrichten sind, die über einen separaten Kommunikationskanal zwischen der Vorrichtung und einem der entsprechenden Geräte übertragen werden.

14. Computerimplementiertes Verfahren zum Bereitstellen einer Steuertransaktion mit folgenden Verfahrensschritten:
- Empfangen einer Transaktion, wobei
∘ die Transaktion Steuerbefehle umfasst;
- Bestimmen eines Gerätes (N1) oder von mehreren Geräten, die jeweils die Steuerbefehle ganz oder teilweise ausführen;
- Übermitteln einer Anfragenachricht zur Ausführung der entsprechenden Steuerbefehle an das Gerät (N1) oder die mehreren Geräte;
- Empfangen von Bestätigungsnachrichten, wobei
∘ die Bestätigungsnachrichten Antworten des Gerätes (N1) oder der mehreren Geräte auf die Anfragenachricht sind;
- Bereitstellen der Transaktion und/oder der Steuerbefehle als Steuertransaktion oder als mehrere Steuertransaktionen anhand der Bestätigungsnachrichten.

15. Computerimplementiertes Verfahren zum Ausführen einer Steuertransaktion durch ein Gerät mit folgenden Verfahrensschritten:
- Empfangen einer Anfragenachricht zur Ausführung von Steuerbefehlen durch ein Gerät (N1);
- Ermitteln eines Prüfergebnisses über eine Ausführbarkeit der Steuerbefehle durch das Gerät;
- Senden einer Bestätigungsnachricht für die Ausführbarkeit der Steuerbefehle durch das Gerät anhand des Prüfergebnisses;
- Empfangen der Steuerbefehle und/oder einer Steuertransaktion mit den Steuerbefehlen;
- Ausführen der Steuerbefehle und/oder der Steuertransaktion.

16. Computerprogrammprodukt mit Programmbefehlen zur Durchführung des Verfahrens nach Anspruch 14 und/oder Anspruch 15.

17. Speichervorrichtung für das Computerprogrammprodukt nach Anspruch 16, wobei die Bereitstellungsvorrichtung das Computerprogrammprodukt speichert und/oder bereitstellt.

## Claims

1. Apparatus (V) having:
- a first reception module, wherein
∘ the first reception module is designed to receive a transaction,
∘ the transaction comprises control commands,
∘ the control commands are intended to be executed by one or more devices (N1) of a network application;
- a determination module, wherein
∘ the determination module is designed to determine a device (N1) or a plurality of devices that each fully or partly execute the control commands,
∘ the determination module is designed to transmit a request message to execute the corresponding control commands to the device (N1) or the plurality of devices,
- a second reception module, wherein
∘ the second reception module is designed to receive confirmation messages,
∘ the confirmation messages are responses from the device (N1) or from the plurality of devices to the request message;
- a provision module, wherein
∘ the provision module is designed to provide the transaction and/or the control commands in the form of a control transaction or in the form of a plurality of control transactions on the basis of the confirmation messages.

2. Apparatus (V) according to the preceding claim, wherein,
- when a validation is provided, the control transaction or the control transactions take place on the basis of the corresponding confirmation messages.

3. Apparatus (V) according to either of the preceding claims, wherein
- the request message comprises execution requests for the device (N1) or the devices to execute the control commands, and/or
- the execution requests are predefined by the control commands and/or by the transaction and/or by a policy, and/or
- the execution requests specify device-specific requests for the device (N1) or the devices, and/or
- the execution requests specify previously executed control commands for the device (N1) or the devices to execute the control commands, and/or
- the execution requests comprise a time request that specifies a processing time guaranteed by a corresponding device (N1.

4. Apparatus (V) according to one of the preceding claims, wherein a corresponding confirmation message comprises current device properties of the device (N1) that for example transmitted the corresponding confirmation message.

5. Apparatus (V) according to one of the preceding claims, wherein
- the determination module for the device (N1) or at least some of the devices comprises device properties, and/or
- the determination module determines the device (N1) or the devices to which the request message is transmitted on the basis of the device properties and/or of the execution requests and/or of the transaction and/or of the control commands, and/or
- the device properties of a corresponding device (N1) are updated in the determination module when the device properties are changed.

6. Apparatus (V) according to one of the preceding claims, wherein
- a number of confirmation messages for a control command from the control commands and/or at least some of the control commands and/or selected control commands from the control commands is predefined, and/or
- the predefined number of confirmation messages in particular confirm execution of the corresponding control commands on a plurality of different devices.

7. Apparatus (V) according to one of the preceding claims, wherein an execution confirmation message is stored following execution of corresponding control commands by a corresponding device (N1.

8. Apparatus (V) according to one of the preceding claims, wherein
- the apparatus (V) comprises a confirmation module, and/or
- the confirmation module is designed to confirm the execution of the control commands and/or control transactions, and/or
- the confirmation takes place on the basis of the execution confirmation message and/or on the basis of the execution requests.

9. Apparatus (V) according to one of the preceding claims, wherein the determination module is designed, when an execution requirement is not complied with and/or in the event of unsuccessful execution of a corresponding control transaction or corresponding control commands by a corresponding device (N1), to transmit the corresponding control transaction or the corresponding control commands, in order to execute them, to a further device that sent a confirmation message for the corresponding control commands or for the corresponding control transaction.

10. Apparatus (V) according to one of the preceding claims, wherein
- an order for the processing of the control transactions is determined by the determination module on the basis of the confirmation messages.

11. Device (N1) having:
- a first reception module, wherein the first reception module is designed to receive a request message to execute control commands;
- an inspection module, wherein the inspection module is designed to ascertain a test result regarding the ability of the device to execute the control commands;
- a transmission module, wherein the transmission module is designed to transmit a confirmation message for the ability of the device to execute the control commands on the basis of the test result;
- a second reception module, wherein the second reception module is designed to receive the control commands and/or a control transaction containing the control commands;
- an execution module, wherein
∘ the execution module is designed to execute the control commands and/or the control transaction,
∘ the execution module is designed to provide an execution confirmation message regarding the execution of the control commands.

12. System having:
- an apparatus (V) according to one of Claims 1 - 10;
- a device (N1) or a plurality of devices according to Claim 11.

13. System according to Claim 12, wherein
- the device (N1) and/or the devices and/or the apparatus are in each case a node or a plurality of nodes of a network application, and/or
- the network application is a distributed database system such as a blockchain, and/or
- the transaction received by the first reception module is an unvalidated transaction, and/or
- the request message and/or the confirmation message and/or the execution confirmation message are in each case a transaction of the network application and/or are messages that are transmitted between the apparatus and one of the corresponding devices via a separate communication channel.

14. Computer-implemented method for providing a control transaction, having the following method steps:
- receiving a transaction, wherein
o the transaction comprises control commands;
- determining a device (N1) or a plurality of devices that each fully or partly execute the control commands;
- transmitting a request message to execute the corresponding control commands to the device (N1) or the plurality of devices;
- receiving confirmation messages, wherein
∘ the confirmation messages are responses from the device (N1) or from the plurality of devices to the request message;
- providing the transaction and/or the control commands in the form of a control transaction or in the form of a plurality of control transactions on the basis of the confirmation messages.

15. Computer-implemented method for the execution of a control transaction by a device, having the following method steps:
- receiving a request message for a device (N1) to execute control commands;
- ascertaining a test result regarding an ability of the device to execute the control commands;
- transmitting a confirmation message for the ability of the device to execute the control commands on the basis of the test result;
- receiving the control commands and/or a control transaction containing the control commands;
- executing the control commands and/or the control transaction.

16. Computer program product containing program commands for performing the method according to Claim 14 and/or Claim 15.

17. Storage apparatus for the computer program product according to Claim 16, wherein the provision apparatus stores and/or provides the computer program product.

## Revendications

1. Dispositif (V) comportant :
- un premier module de réception,
∘ le premier module de réception étant configuré pour recevoir une transaction,
∘ la transaction comprenant des ordres de commande,
∘ les ordres de commande devant être exécutés par un ou plusieurs appareils (N1) d'une application de réseau,
- un module de détermination,
∘ le module de détermination étant configuré pour déterminer un appareil (N1) ou plusieurs appareils qui exécutent respectivement, en tout ou en partie, les ordres de commande,
∘ le module de détermination étant configuré pour transmettre à l'appareil (N1) ou aux plusieurs appareils un message de requête pour l'exécution des ordres de commande correspondants,
- un deuxième module de réception,
∘ le deuxième module de réception étant configuré pour recevoir des messages de confirmation,
∘ les messages de confirmation étant des réponses de l'appareil (N1) ou des plusieurs appareils au message de requête,
- un module de mise à disposition,
∘ le module de mise à disposition étant configuré pour fournir la transaction et/ou les ordres de commande à l'aide des messages de confirmation en tant que transaction de commande ou en tant que plusieurs transactions de commande.

2. Dispositif (V) selon la revendication précédente,
- la transaction de commande ou les transactions de commande se produisant à l'aide des messages de confirmation correspondants lors de la fourniture d'une validation.

3. Dispositif (V) selon l'une des revendications précédentes,
- le message de requête comprenant des exigences d'exécution pour une exécution des ordres de commande par l'appareil (N1) ou les appareils, et/ou
- les exigences d'exécution étant spécifiées par les ordres de commande et/ou par la transaction et/ou par une stratégie, et/ou
- les exigences d'exécution spécifiant des exigences spécifiques aux appareils pour l'appareil (N1) ou les appareils, et/ou
- les exigences d'exécution spécifiant des ordres de commande exécutés préalablement pour une exécution des ordres de commande par l'appareil (N1) ou les appareils, et/ou
- les exigences d'exécution comprenant une exigence de temps qui spécifie un temps de traitement garanti par un appareil correspondant (N1.

4. Dispositif (V) selon l'une des revendications précédentes, un message de confirmation correspondant comprenant des caractéristiques d'appareil actuelles de l'appareil (N1) qui a émis, par exemple, le message de confirmation correspondant.

5. Dispositif (V) selon l'une des revendications précédentes,
- le module de détermination comprenant des caractéristiques d'appareil pour l'appareil (N1) ou au moins une partie des appareils, et/ou
- le module de détermination déterminant, à l'aide des caractéristiques d'appareil et/ou des exigences d'exécution et/ou de la transaction et/ou des ordres de commande, l'appareil (N1) ou les appareils auxquels est transmis le message de requête, et/ou
- les caractéristiques d'appareil d'un appareil correspondant (N1) étant mises à jour dans le module de détermination lors d'une modification des caractéristiques d'appareil.

6. Dispositif (V) selon l'une des revendications précédentes,
- un nombre de messages de confirmation étant spécifié pour un ordre de commande des ordres de commande et/ou au moins une partie des ordres de commande et/ou des ordres de commande sélectionnés parmi les ordres de commande, et/ou
- en particulier le nombre de messages de confirmation spécifié confirmant une exécution des ordres de commande correspondants sur plusieurs appareils différents.

7. Dispositif (V) selon l'une des revendications précédentes, un message de confirmation d'exécution étant sauvegardé après une exécution d'ordres de commande correspondants par un appareil correspondant (N1.

8. Dispositif (V) selon l'une des revendications précédentes,
- le dispositif (V) comprenant un module de confirmation, et/ou
- le module de confirmation étant configuré pour confirmer l'exécution des ordres de commande et/ou des transactions de commande, et/ou
- la confirmation se faisant à l'aide du message de confirmation d'exécution et/ou à l'aide des exigences d'exécution.

9. Dispositif (V) selon l'une des revendications précédentes, le module de détermination étant configuré pour transmettre, en cas de non-respect de la condition d'exécution et/ou en cas d'échec de l'exécution d'une transaction de commande correspondante ou d'ordres de commande correspondants par un appareil correspondant (N1, la transaction de commande correspondante ou les ordres de commande correspondants pour exécution à un autre appareil, lequel a envoyé un message de confirmation pour les ordres de commande correspondants ou pour la transaction de commande correspondante.

10. Dispositif (V) selon l'une des revendications précédentes,
- un ordre pour le traitement des transactions de commande est déterminé par le module de détermination à l'aide des messages de confirmation.

11. Appareil (N1) comportant :
- un premier module de réception, le premier module de réception étant configuré pour recevoir un message de requête pour l'exécution d'ordres de commande,
- un module de vérification, le module de vérification étant configuré pour déterminer un résultat de contrôle relatif à l'exécutabilité des ordres de commande par l'appareil,
- un module d'émission, le module d'émission étant configuré pour émettre un message de confirmation pour l'exécutabilité des ordres de commande par l'appareil à l'aide du résultat de contrôle,
- un deuxième module de réception, le deuxième module de réception étant configuré pour recevoir les ordres de commande et/ou une transaction de commande avec les ordres de commande,
- un module d'exécution,
∘ le module d'exécution étant configuré pour exécuter les ordres de commande et/ou la transaction de commande,
∘ le module d'exécution étant configuré pour fournir un message de confirmation d'exécution relatif à l'exécution des ordres de commande.

12. Système comportant :
- un dispositif (V) selon l'une des revendications 1-10 ;
- un appareil (N1) ou plusieurs appareils selon la revendication 11.

13. Système selon la revendication 12,
- l'appareil (N1) et/ou les appareils et/ou le dispositif étant respectivement un nœud ou plusieurs nœuds d'une application de réseau, et/ou
- l'application de réseau étant un système de base de données distribué tel qu'une chaîne de blocs, et/ou
- la transaction reçue par le premier module de réception étant une transaction non validée, et/ou
- le message de requête et/ou le message de confirmation et/ou le message de confirmation d'exécution étant respectivement une transaction de l'application de réseau et/ou des messages qui sont transmis via un canal de communication séparé entre le dispositif et un des appareils correspondants.

14. Procédé implémenté par un ordinateur pour fournir une transaction de commande, comportant les étapes de procédé suivantes :
- réception d'une transaction,
o la transaction comprenant des ordres de commande,
- détermination d'un appareil (N1) ou de plusieurs appareils qui exécutent respectivement, en tout ou en partie, les ordres de commande,
- transmission d'un message de requête pour l'exécution des ordres de commande correspondants à l'appareil (N1) ou aux plusieurs appareils;
- réception de messages de confirmation,
∘ les messages de confirmation étant des réponses de l'appareil (N1) ou des plusieurs appareils au message de requête,
- fourniture de la transaction et/ou des ordres de commande en tant que transaction de commande ou en tant que plusieurs transactions de commande à l'aide des messages de confirmation.

15. Procédé implémenté par un ordinateur pour l'exécution d'une transaction de commande par un appareil, comportant les étapes de procédé suivantes :
- réception d'un message de requête pour l'exécution d'ordres de commande par un appareil (N1,
- détermination d'un résultat de contrôle relatif à l'exécutabilité des ordres de commande par l'appareil,
- émission d'un message de confirmation pour l'exécutabilité des ordres de commande par l'appareil à l'aide du résultat de contrôle,
- réception des ordres de commande et/ou d'une transaction de commande avec les ordres de commande,
- exécution des ordres de commande et/ou de la transaction de commande.

16. Produit de programme informatique comportant des instructions de programme pour l'exécution du procédé selon la revendication 14 et/ou la revendication 15.

17. Dispositif de mémoire pour le produit de programme informatique selon la revendication 16, le dispositif de mise à disposition sauvegardant et/ou fournissant le produit de programme informatique.
